# EUROPEAN PATENT APPLICATION

(11) **EP 4 456 508 A1**
(43) Date of publication of application: **30.10.2024**
(21) Application number: 23739972.0
(22) Date of filing: 09.01.2023
(51) Int. Cl.: H04L 47/20

(54) **POLICY CONFIGURATION METHOD AND APPARATUS**

(30) Priority: 14.01.2022 CN 202210044585; 11.03.2022 CN 202210239496
(71) Applicant: Huawei Technologies Co., Ltd., Shenzhen, Guangdong 518129 (CN)
(72) Inventor: WEI, Xinpeng, Shenzhen, Guangdong 518129 (CN); ZHU, Fenqin, Shenzhen, Guangdong 518129 (CN)
(74) Representative: Gill Jennings & Every LLP
(86) International application number: PCT/CN2023/071344
(87) International publication number: WO 2023/134630

(57) **Abstract**

This application provides a policy configuration method and apparatus. The method may include: A policy control network element receives traffic flow routing control information and first service type information corresponding to the traffic flow routing control information, where the first service type information includes first service category information and/or first subscriber category information; the policy control network element generates, based on the traffic flow routing control information, a policy and charging control rule for a user equipment corresponding to the first service type information; and the policy control network element sends the policy and charging control rule. According to the foregoing solutions, the policy may be configured for a plurality of users.

## Description

This application claims priorities to Chinese Patent Application No. 202210044585.1, filed with the China National Intellectual Property Administration on January 14, 2022 and entitled "POLICY CONFIGURATION METHOD AND APPARATUS", and to Chinese Patent Application No. 202210239496.2, filed with the China National Intellectual Property Administration on March 11, 2022 and entitled "POLICY CONFIGURATION METHOD AND APPARATUS", both of which are incorporated herein by reference in their entireties.

### TECHNICAL FIELD

This application relates to the field of communication technologies, and in particular, to a policy configuration method and apparatus.

### BACKGROUND

In edge computing or some other scenarios, an application function (application function, AF) may provide a traffic flow routing control policy for a plurality of user equipments (user equipments, UEs) by using a group (group)-based mechanism. For example, the AF may predefine a group and a plurality of members included in the group, and then use a group identifier (group ID) in the traffic flow routing control policy to represent the group members. In this manner, the AF may configure the traffic flow routing control policy for the plurality of members. A policy control network element (policy control function, PCF) may generate a policy and charging control rule according to the traffic flow routing control policy provided by the AF, to control traffic flow routing.

However, according to an existing protocol, a problem exists in a manner of providing a traffic flow control policy for a plurality of user equipments in a group-based manner. For example, the group-based manner can be used to provide the traffic flow control policy for a plurality of user equipments only at a group granularity, but cannot be used to provide a traffic flow control policy for a plurality of user equipments at a finer granularity. For another example, members of a same group need to belong to a same public land mobile network (public land mobile network, PLMN). In a mobile network roaming scenario, when a roaming subscriber and a non-roaming subscriber belong to different PLMNs, the AF cannot provide a traffic flow routing control policy for both the roaming subscriber and the non-roaming subscriber by using the group-based mechanism.

### SUMMARY

This application provides a policy configuration method and apparatus, to configure a policy for a plurality of users.

According to a first aspect, a policy configuration method is provided. The method includes: A policy control network element receives traffic flow routing control information and first service type information corresponding to the traffic flow routing control information, where the first service type information includes first service category information and/or first subscriber category information; the policy control network element generates, based on the traffic flow routing control information, a policy and charging control rule for a user equipment corresponding to the first service type information; and the policy control network element sends the policy and charging control rule.

Based on the foregoing solution, the policy control network element may generate, based on the traffic flow routing control information, the policy and charging control rule for the user equipment corresponding to the first service type information. Therefore, in the foregoing solution, the policy may be configured for one or more users corresponding to the first service type information. For example, a policy may be configured for users belonging to different PLMNs, and users in a same group may correspond to different first service type information. Therefore, based on the first service type information, a policy may be configured for one or more users at a granularity smaller than the group, so that policy configuration efficiency can be improved and resources can be saved.

It should be understood that, that the traffic flow routing control information corresponds to the first service type information means that the traffic flow routing control information is used to generate the policy and charging control rule for the user equipment corresponding to the first service type information.

With reference to the first aspect, in some implementations of the first aspect, the user equipment corresponding to the first service type information includes a roaming user equipment and a non-roaming user equipment.

Based on the foregoing solution, the policy may be configured for both the roaming subscriber and the non-roaming subscriber, so that the policy configuration efficiency can be improved and the resources can be saved.

With reference to the first aspect, in some implementations of the first aspect, that the policy control network element generates, based on the traffic flow routing control information, a policy and charging control rule for a user equipment corresponding to the first service type information includes:
The policy control network element determines, based on subscription information of the user equipment, that the user equipment is the user equipment corresponding to the first service type information; and the policy control network element generates the policy and charging control rule for the user equipment based on the traffic flow routing control information.

With reference to the first aspect, in some implementations of the first aspect, the method further includes: The policy control network element obtains the subscription information of the user equipment.

With reference to the first aspect, in some implementations of the first aspect, that the policy control network element obtains the subscription information of the user equipment includes: The policy control network element receives the subscription information of the user equipment from a unified data repository network element or a session management network element.

It should be understood that the subscription information of the user equipment may be subscription information between the user equipment and a carrier, or may be subscription information between the user equipment and an application service provider. The subscription information between the user equipment and the application service provider may also be referred to as "application data". The subscription information of the user equipment may also be understood as information related to the user equipment, or may use another name, for example, user equipment information or user equipment association information. This is not limited herein. In this application, the subscription information of the user equipment may also be referred to as user equipment subscription information, user equipment subscription, or the like.

Based on the foregoing solution, the policy control network element may determine, based on the subscription information of the user equipment, whether the user equipment is the user equipment corresponding to the first type of service information. When determining that the user equipment is the user equipment corresponding to the first type of service information, the policy control network element generates the policy and charging control rule for the user equipment. Alternatively, more specifically, the policy control network element generates a policy and charging control rule for a protocol data unit session (PDU session) of the user equipment. In other words, that the policy control network element generates, based on the traffic flow routing control information, a policy and charging control rule for a user equipment corresponding to the first service type information means that the policy control network element generates, based on the traffic flow routing control information, the policy and charging control rule for the protocol data unit session (PDU session) of the user equipment corresponding to the first service type information. In this way, the policy may be configured for one or more user equipments corresponding to the first service type information. Therefore, the policy configuration efficiency can be improved and the resources can be saved.

With reference to the first aspect, in some implementations of the first aspect, that the policy control network element determines, based on subscription information of the user equipment, that the user equipment is the user equipment corresponding to the first service type information includes: The policy control network element determines, when the first service type information matches second service type information, that the user equipment is the user equipment corresponding to the first service type information, where the second service type information is included in the subscription information of the user equipment, and the second service type information includes second service category information and/or second subscriber category information.

Based on the foregoing solution, the policy control network element may determine, based on the first service type information and the second service type information that is in the subscription information of the user equipment, whether one user equipment is the user equipment corresponding to the first service type information.

With reference to the first aspect, in some implementations of the first aspect, that the policy control network element determines, when the first service type information matches second service type information, that the user equipment is the user equipment corresponding to the first service type information includes: If the second service type information includes the first service type information, the policy control network element determines, that the user equipment is the user equipment corresponding to the first service type information; or if the first service type information includes a plurality of pieces of service type information, when the second service type information includes all of the plurality of pieces of service type information, the policy control network element determines that the user equipment is the user equipment corresponding to the first service type information; or when the second service type information includes at least one of the plurality of pieces of service type information, the policy control network element determines that the user equipment is the user equipment corresponding to the first service type information, where each of the plurality of pieces of service type information includes the first service category information and/or the first subscriber category information. The first service type information may include only one piece of service type information, or may include a plurality of pieces of service type information. If the first service type information includes the plurality of pieces of service type information, in an implementation, when the second service type information includes all of the plurality of pieces of service type information in the first service type information, the policy control network element determines that the user equipment is the user equipment corresponding to the first service type information. In another implementation, when the second service type information includes the at least one of the plurality of pieces of service type information in the first service type information, the policy control network element determines that the user equipment is the user equipment corresponding to the first service type information.

It should be understood that the first service category information and/or the first subscriber category information included in each of the plurality of pieces of service type information may be the same or may be different. This is not limited in this application.

Based on the foregoing solution, whether the second service type information matches the first service type information may be determined in various different manners, so as to determine whether one user equipment is the user equipment corresponding to the first service type information.

With reference to the first aspect, in some implementations of the first aspect, the method further includes: The policy control network element receives first application identification information and/or first application service provider identification information that correspond/corresponds to the first service type information. With reference to the first aspect, in some implementations of the first aspect, that the policy control network element determines that the user equipment is the user equipment corresponding to the first service type information includes: When the first application identification information and/or the first application service provider identification information match/matches second application identification information and/or second application service provider identification information, the policy control network element determines that the user equipment is the user equipment corresponding to the first service type information, where the second application identification information and/or the second application service provider identification information are/is included in the subscription information of the user equipment.

Based on the foregoing solution, the policy control network element may further determine, by using the first application identification information and/or the first application service provider identification information, that one user equipment is the user equipment corresponding to the first service type information.

With reference to the first aspect, in some implementations of the first aspect, the method further includes: When the first application identification information and/or the first application service provider identification information are/is the same as the second application identification information and/or the second application service provider identification information, the policy control network element determines that the first application identification information and/or the first application service provider identification information match/matches the second application identification information or the second application service provider identification information.

Based on the foregoing solution, the policy control network element may determine, based on the first application identification information and/or the first application service provider identification information, and the second application identification information and/or the second application service provider identification information, that one user equipment is the user equipment corresponding to the first service type information.

With reference to the first aspect, in some implementations of the first aspect, that a policy control network element receives traffic flow routing control information and first service type information corresponding to the traffic flow routing control information includes: The policy control network element receives the traffic flow routing control information and the first service type information corresponding to the traffic flow routing control information from a network exposure function network element. The network exposure function network element receives the traffic flow routing control information and the first service type information corresponding to the traffic flow routing control information from an application function network element, and sends the traffic flow routing control information and the first service type information corresponding to the traffic flow routing control information to the policy control network element; or after converting partial information in the traffic flow routing control information, the network exposure function network element sends the traffic flow routing control information and the first service type information corresponding to the traffic flow routing control information to the policy control network element.

With reference to the first aspect, in some implementations of the first aspect, the method further includes: The policy control network element receives the subscription information of the user equipment from a unified data repository network element or a session management network element.

With reference to the first aspect, in some implementations of the first aspect, that the policy control network element generates, based on the traffic flow routing control information, a policy and charging control rule for a user equipment corresponding to the first service type information includes: The policy control network element generates, based on the traffic flow routing control information, the policy and charging control rule for the protocol data unit session of the user equipment corresponding to the first service type information.

According to a second aspect, a policy configuration method is provided. The method includes: A policy control network element receives traffic flow routing control information and identification information of a subscriber corresponding to the traffic flow routing control information; the policy control network element generates a policy and charging control rule for the subscriber based on the traffic flow routing control information; and the policy control network element sends the policy and charging control rule.

Based on the foregoing solution, the policy control network element may generate the policy and charging control rule for the subscriber based on the traffic flow routing control information. Therefore, in the foregoing solution, the policy may be configured for one or more subscribers. For example, the policy may be configured for subscribers belonging to different PLMNs. Therefore, policy configuration efficiency can be improved and resources can be saved.

That the traffic flow routing control information corresponds to the identification information of the subscriber means that the traffic flow routing control information is associated with the identification information of the subscriber, the traffic flow routing control information is used to generate the policy and charging control rule for the user equipment corresponding to the identification information of the subscriber, or the traffic flow routing control information corresponds to a user equipment group in which the subscriber in the identification information of the subscriber is located.

With reference to the second aspect, in some implementations of the second aspect, the subscriber includes a roaming subscriber and a non-roaming subscriber.

Based on the foregoing solution, the policy may be configured for both the roaming subscriber and the non-roaming subscriber, so that the policy configuration efficiency can be improved and the resources can be saved. With reference to the second aspect, in some implementations of the second aspect, that the policy control network element generates a policy and charging control rule for the subscriber based on the traffic flow routing control information includes: The policy control network element determines that the user equipment belongs to the subscriber; and the policy control network element generates the policy and charging control rule for the user equipment based on the traffic flow routing control information.

With reference to the second aspect, in some implementations of the second aspect, the method further includes: The policy control network element obtains subscription information of the user equipment, where the subscription information of the user equipment includes an identifier of the user equipment.

With reference to the second aspect, in some implementations of the second aspect, that the policy control network element obtains subscription information of the user equipment includes: The policy control network element receives the subscription information of the user equipment from a unified data repository network element or a session management network element.

Based on the foregoing solution, the policy control network element may determine whether a user equipment is the subscriber, for example, determine, by using subscription information of the user equipment, whether the user equipment is the subscriber. When a user equipment is the subscriber, the policy control network element may generate the policy and charging control rule for the user equipment, to improve the policy configuration efficiency and save the resources.

With reference to the second aspect, in some implementations of the second aspect, that the policy control network element determines that the user equipment belongs to the subscriber includes: When the identifier of the user equipment is included in an identifier of the subscriber, the policy control network element determines that the user equipment belongs to the subscriber.

Based on the foregoing solution, when the policy control network element determines that the identifier of the user equipment is included in the identifier of the subscriber, the policy control network element may generate the policy and charging control rule for the user equipment based on policy information corresponding to the identifier of the subscriber, to configure an access control policy for a plurality of users.

With reference to the second aspect, in some implementations of the second aspect, that a policy control network element receives traffic flow routing control information and an identifier of a subscriber corresponding to the traffic flow routing control information includes: The policy control network element receives the traffic flow routing control information and the identifier of the subscriber corresponding to the traffic flow routing control information from an application function network element.

According to a third aspect, a policy configuration method is provided. The method includes: An application function network element sends traffic flow routing control information and first service type information corresponding to the traffic flow routing control information, where the first service type information includes first service category information and/or first subscriber category information.

Based on the foregoing solution, the application function network element sends the traffic flow routing control information and the first service type corresponding to the traffic flow routing control information (for example, to a unified data repository network element through a network exposure function network element), so that the traffic flow routing control information may be used to configure a policy for one or more users corresponding to the first service type information. In this way, the policy may be configured for the one or more users corresponding to the first service type information. For example, the policy may be configured for users belonging to different PLMNs. Therefore, policy configuration efficiency can be improved and resources can be saved.

With reference to the third aspect, in some implementations of the third aspect, the method includes: The application function network element generates a policy, where the policy corresponds to the traffic flow routing control information and the first service type information.

With reference to the third aspect, in some implementations of the third aspect, the method further includes: The application function network element sending identification information of a subscriber and the first service type information, where the identification information of the subscriber is associated with the first service type information.

In an implementation, the application function network element sends the identification information of the subscriber and the first service type information to the unified data repository network element through the network exposure function network element.

With reference to the third aspect, in some implementations of the third aspect, the application function network element may send the identification information of the subscriber and the first service type information, to configure the policy for the subscriber corresponding to the first service type information.

With reference to the third aspect, in some implementations of the third aspect, the first service type information includes a plurality of pieces of service type information.

With reference to the third aspect, in some implementations of the third aspect, the method further includes: The application function network element sends first application identification information and/or first application service provider identification information that correspond/corresponds to the first service type information.

According to a fourth aspect, a policy configuration method is provided. The method includes: A unified data repository network element receives traffic flow routing control information and identification information of a user equipment group corresponding to the traffic flow routing control information; the unified data repository network element determines, based on the identification information of the user equipment group, identification information of a subscriber corresponding to the identification information of the user equipment group; and the unified data repository network element sends the traffic flow routing control information and the identification information of the subscriber to a policy control network element, where the traffic flow routing control is associated with the identification information of the subscriber.

Based on the foregoing solution, the unified data repository network element may determine, according to the identification information of the user equipment group, the identification information of the subscriber corresponding to the identification information of the user equipment group, and send the identification information of the subscriber and the traffic flow routing control information received by the unified data repository network element to the policy control network element, so that the policy control network element may configure a policy for the subscriber based on the information.

With reference to the fourth aspect, in some implementations of the fourth aspect, before the unified data repository network element receives the traffic flow routing control information and the identification information of the user equipment group corresponding to the traffic flow routing control information from an application function network element, the method further includes: The unified data repository network element receives the identification information of the user equipment group and the identification information of the subscriber from the application function network element, where the identifier of the user equipment group is associated with the identification information of the subscriber.

According to a fifth aspect, a policy configuration method is provided. The method includes: A unified data repository network element receives traffic flow routing control information and first service type information corresponding to the traffic flow routing control information, where the first service type information includes first service category information and/or first subscriber category information; the data management network element determines, based on the first service type information, identification information of a subscriber corresponding to the first service type information; and the unified data repository network element sends the traffic flow routing control information and the identification information of the subscriber to a policy control network element.

In an implementation, the unified data repository network element may be a unified data repository function network element. For example, in a 5G system, the unified data repository network element may be a UDR.

Based on the foregoing solution, the unified data repository network element may determine, based on the first service type information, the identification information of the subscriber corresponding to identification information of a user equipment group, and send the identification information of the subscriber and the traffic flow routing control information received by the unified data repository network element to the policy control network element, so that the policy control network element may configure a policy for the subscriber based on the information. With reference to the fifth aspect, in some implementations of the fifth aspect, before the unified data repository network element receives the traffic flow routing control information and the first service type information corresponding to the traffic flow routing control information from an application function network element, the method further includes: The unified data repository network element receives the identification information of the subscriber and the first service type information from the application function network element, where the identification information of the subscriber is associated with the first service type information.

According to a sixth aspect, a policy configuration method is provided. The method includes: An application function network element sends traffic flow routing control information and identification information of a user equipment group corresponding to the traffic flow routing control information to a unified data repository network element, where the user equipment group includes a subscriber.

Based on the foregoing solution, the application function network element sends the traffic flow routing control information and the identification information of the user equipment group corresponding to the traffic flow routing control information (for example, to a unified data repository network element through a network exposure function network element), so that the traffic flow routing control information may be used to configure a policy for one or more subscribers in the user equipment group. In this way, the policy may be configured for the one or more subscribers in the user equipment group. For example, the policy may be configured for users belonging to different PLMNs. Therefore, policy configuration efficiency can be improved and resources can be saved.

With reference to the sixth aspect, in some implementations of the sixth aspect, before that an application function network element sends traffic flow routing control information and identification information of a user equipment group corresponding to the traffic flow routing control information to a unified data repository network element, the method further includes: The application function network element sends an identifier of the user equipment group and identification information of the subscriber to the unified data repository network element, where the identification information of the user is associated with the identifier of the user equipment group.

According to a seventh aspect, a policy configuration method is provided. The method includes: A session management network element receives subscription information of a user equipment from a unified data management network element, where the subscription information includes service type information, and the service type information includes service category information and/or subscriber category information; and the session management network element sends the subscription information to a policy control network element.

Based on the foregoing solution, the session management network element may send, to the policy control network element, the subscription information that is of the user equipment and that is received from the unified data management network element, so that the policy control network element may configure a policy for the user equipment.

With reference to the seventh aspect, in some implementations of the seventh aspect, before that a session management network element receives subscription information of a user equipment from a unified data management network element, the method further includes: The session management network element sends a subscription information request message to the unified data repository network element, where the subscription information request message includes an identifier of the user equipment, and the subscription information request message is used to request the subscription information of the user equipment.

According to an eighth aspect, a policy configuration method is provided. The method includes: A unified data management network element receives subscription information and identification information of a subscriber, where the subscription information includes service type information, the service type information includes service category information and/or subscriber category information, and the subscription information is associated with the identification information of the subscriber; and the unified data management network element stores the subscription information and the identification information of the subscriber.

Based on the foregoing solution, the unified data management network element may pre-store the received subscription information and the identification information of the subscriber corresponding to the subscription information, to configure a policy for one or more subscribers based on the information.

With reference to the eighth aspect, in some implementations of the eighth aspect, the method further includes: The unified data management network element receives a subscription information request message from a session management network element, where the subscription information request message includes identification information of a user equipment, and the subscription information request message is used to request subscription information of the user equipment; and the unified data management network element sends the subscription information to the session management network element when the identification information of the user equipment is included in the identification information of the subscriber.

With reference to the eighth aspect, in some implementations of the eighth aspect, the subscription information further includes second application identification information and/or second application service provider identification information.

According to a ninth aspect, a policy configuration method is provided. The method includes: A policy control network element receives traffic flow routing control information and group information corresponding to the traffic flow routing control information, where the group information includes a plurality of group identifiers; the policy control network element generates, based on the traffic flow routing control information, a policy and charging control rule for a user equipment that matches the group information; and the policy control network element sends the policy and charging control rule.

Based on the foregoing solution, the policy control network element may generate, based on the traffic flow routing control information, the policy and charging control rule for the user equipment that matches the group information, so that the policy may be configured for one or more subscribers. For example, the policy may be configured for user equipments belonging to different PLMNs (for example, a roaming user equipment and a non-roaming user equipment). Therefore, policy configuration efficiency can be improved and resources can be saved.

Specifically, the policy control network element may receive the traffic flow routing control information and the group information corresponding to the traffic flow routing control information. For example, the policy control network element may receive the traffic flow routing control information and the group information from a unified data repository network element; the policy control network element may receive the traffic flow routing control information and the group information from a network exposure function network element; or the policy control network element may receive the traffic flow routing control information and the group information from an application function network element. When the policy control network element determines that a user equipment matches the group information, the policy control network element may generate the policy control and charging rule for the user equipment by using the traffic flow routing control information.

With reference to the ninth aspect, in some implementations of the ninth aspect, that a policy control network element receives traffic flow routing control information and group information corresponding to the traffic flow routing control information includes: The policy control network element receives the traffic flow routing control information and the group information corresponding to the traffic flow routing control information from the unified data repository network element.

It should be noted that the group information herein may be information provided by the application function network element; or may be information obtained by converting, by the network exposure function network element, information provided by the application function network element. The following provides descriptions with reference to examples.

In an implementation, after generating traffic flow routing control information, the application function network element sends the traffic flow routing control information and group information (denoted as first group information) to the network exposure function network element, where the first group information includes a plurality of internal group identifiers. After receiving the traffic flow routing control information and the first group information from the application function network element, the network exposure function network element sends the traffic flow routing control information and group information (denoted as second group information) to the unified data repository network element. In this case, the first group information is the same as the second group information. After receiving the traffic flow routing control information and the second group information, the unified data repository network element sends the traffic flow routing control information and the second group information to the policy control network element.

In another implementation, after generating traffic flow routing control information, the application function network element sends the traffic flow routing control information and group information (denoted as first group information) to the network exposure function network element, where the first group information includes a plurality of external group identifiers. After receiving the traffic flow routing control information and the first group information from the application function network element, the network exposure function network element converts the plurality of external group identifiers in the first group information into internal group identifiers to obtain new group information (denoted as a second group of information), and then the network exposure function network element sends the traffic flow routing control information and the group information (denoted as the second group information) to the unified data repository network element. In this case, the first group information is the same as the second group information. After receiving the traffic flow routing control information and the second group information, the unified data repository network element sends the traffic flow routing control information and the second group information to the policy control network element.

With reference to the foregoing examples, the group information that corresponds to the traffic flow routing control information and that is received by the policy control network element may correspond to the second group information in the foregoing examples. For a more detailed example, refer to descriptions of S902 to S904 in the method 900 of the subsequent specific implementation part. Details are not described herein again.

With reference to the ninth aspect, in some implementations of the ninth aspect, that the policy control network element generates, based on the traffic flow routing control information, a policy and charging control rule for a user equipment that matches the group information includes: The policy control network element determines, based on subscription information of the user equipment, that the user equipment matches the group information; and the policy control network element generates the policy and charging control rule for the user equipment based on the traffic flow routing control information.

Based on the foregoing solution, after obtaining the subscription information of the user equipment, the policy control network element may determine, based on the subscription information, whether the user equipment matches the group information. If the user equipment matches the group information, the policy control network element may generate the policy control and charging rule for the user equipment based on the traffic flow routing control information corresponding to the group information, so that the policy may be configured for a plurality of subscribers. Therefore, efficiency is improved and resources are saved.

With reference to the ninth aspect, in some implementations of the ninth aspect, that the policy control network element determines, based on subscription information of the user equipment, that the user equipment matches the group information includes: When the subscription information of the user equipment includes the plurality of group identifiers in the group information, the policy control network element determines that the user equipment matches the group information.

Based on the foregoing solution, the policy control network element may generate the policy and charging control rule for the user equipments whose subscription information includes the plurality of group identifiers in the group information. In other words, the policy control network element may generate the policy and charging control rule for one or more different user equipments, to improve the efficiency.

With reference to the ninth aspect, in some implementations of the ninth aspect, the plurality of group identifiers in the group information have a logical relationship; and that the policy control network element determines, based on subscription information of the user equipment, that the user equipment matches the group information includes: When the subscription information of the user equipment satisfies the logical relationship between the plurality of group identifiers, the policy control network element determines that the user equipment matches the group information.

Based on the foregoing solution, the policy control network element may generate the policy and charging control rule for the user equipment whose subscription information satisfies the logical relationship between the plurality of group identifiers in the group information, in other words, the policy control network element may generate the policy and charging control rule for one or more different user equipments, to improve the efficiency.

According to a tenth aspect, a policy configuration method is provided. The method includes: An application function network element sends traffic flow routing control information and group information corresponding to the traffic flow routing control information, where the group information includes a plurality of group identifiers.

With reference to the tenth aspect, in some implementations of the tenth aspect, the plurality of group identifiers in the group information have a logical relationship.

With reference to the tenth aspect, in some implementations of the tenth aspect, the method further includes: The policy control network element receives subscription information of user equipment from a unified data repository network element or a session management network element.

According to an eleventh aspect, a communication apparatus is provided. The apparatus includes: a transceiver module, configured to receive traffic flow routing control information and first service type information corresponding to the traffic flow routing control information, where the first service type information includes first service category information and/or first subscriber category information; and a processing module, configured to generate a policy and charging control rule for a user equipment corresponding to the first service type information, where the policy control network element sends the policy and charging control rule.

With reference to the eleventh aspect, in some implementations of the eleventh aspect, the processing module may be specifically configured to: determine, based on subscription information of the user equipment, that the user equipment is the user equipment corresponding to the first service type information; and generate the policy and charging control rule for the user equipment based on the traffic flow routing control information.

With reference to the eleventh aspect, in some implementations of the eleventh aspect, when the first service type information matches second service type information, the processing module may be specifically configured to determine that the user equipment is the user equipment corresponding to the first service type information, where the second service type information is included in the subscription information of the user equipment, and the second service type information includes second service category information and/or second subscriber category information.

With reference to the eleventh aspect, in some implementations of the eleventh aspect, when the second service type information includes the first service type information, the processing module may be specifically configured to determine that the user equipment is the user equipment corresponding to the first service type information; or when the second service type information includes at least one of a plurality of pieces of service type information in the first service type information, the processing module may be specifically configured to determine that the user equipment is the user equipment corresponding to the first service type information.

With reference to the eleventh aspect, in some implementations of the eleventh aspect, the transceiver module is further configured to receive first application identification information and/or first application service provider identification information that correspond/corresponds to the first service type information.

With reference to the eleventh aspect, in some implementations of the eleventh aspect, the processing module may be specifically configured to: when the first application identification information and/or the first application service provider identification information match/matches second application identification information and/or second application service provider identification information, determine that the user equipment is the user equipment corresponding to the first service type information, where the second application identification information and/or the second application service provider identification information are/is included in the subscription information of the user equipment.

With reference to the eleventh aspect, in some implementations of the eleventh aspect, the processing module is further configured to: when the first application identification information and/or the first application service provider identification information are/is the same as the second application identification information or the second application service provider identification information, determine, for the policy control network element, that the first application identification information and/or the first application service provider identification information match/matches the second application identification information or the second application service provider identification information.

With reference to the eleventh aspect, in some implementations of the eleventh aspect, the transceiver module may be specifically configured to receive the traffic flow routing control information and the first service type information corresponding to the traffic flow routing control information from a network exposure function network element.

With reference to the eleventh aspect, in some implementations of the eleventh aspect, the processing module may be specifically configured to generate, based on the traffic flow routing control information, the policy and charging control rule for a session of the user equipment corresponding to the first service type information.

According to a twelfth aspect, a communication apparatus is provided. The apparatus includes: a transceiver module, configured to receive traffic flow routing control information and identification information of a subscriber corresponding to the traffic flow routing control information; and a processing module, configured to generate a policy and charging control rule for the subscriber based on the traffic flow routing control information, where the transceiver module is further configured to send the policy and charging control rule.

With reference to the twelfth aspect, in some implementations of the twelfth aspect, the processing module may be specifically configured to: determine that a user equipment belongs to the subscriber; and generate the policy and charging control rule for the user equipment based on the traffic flow routing control information.

With reference to the twelfth aspect, in some implementations of the twelfth aspect, the processing module may be specifically configured to: if an identifier of the user equipment is included in an identifier of the subscriber, determine that the user equipment belongs to the subscriber.

With reference to the twelfth aspect, in some implementations of the twelfth aspect, the transceiver module may be specifically configured to receive the traffic flow routing control information and the identifier of the subscriber corresponding to the traffic flow routing control information from an application function network element.

According to a thirteenth aspect, a policy configuration apparatus is provided. The apparatus includes: a transceiver module, configured to send traffic flow routing control information and first service type information corresponding to the traffic flow routing control information, where the first service type information includes first service category information and/or first subscriber category information.

With reference to the thirteenth aspect, in some implementations of the thirteenth aspect, the transceiver module is further configured to send identification information of a subscriber and the first service type information, where the identification information of the subscriber is associated with the first service type information.

With reference to the thirteenth aspect, in some implementations of the thirteenth aspect, the first service type information includes a plurality of pieces of service type information.

With reference to the thirteenth aspect, in some implementations of the thirteenth aspect, the transceiver module is further configured to send first application identification information and/or first application service provider identification information that correspond/corresponds to the first service type information.

According to a fourteenth aspect, a policy configuration apparatus is provided. The apparatus includes: a transceiver module, configured to receive traffic flow routing control information and identification information of a user equipment group corresponding to the traffic flow routing control information; and a processing module, configured to determine, based on the identification information of the user equipment group, identification information of a subscriber corresponding to the identification information of the user equipment group, where the transceiver module is further configured to send the traffic flow routing control information and the identification information of the subscriber to a policy control network element, where the traffic flow routing control is associated with the identification information of the subscriber.

With reference to the fourteenth aspect, in some implementations of the fourteenth aspect, the transceiver module is further configured to receive the identification information of the user equipment group and the identification information of the subscriber from an application function network element, where an identifier of the user equipment group is associated with the identification information of the subscriber.

According to a fifteenth aspect, a policy configuration apparatus is provided. The apparatus includes: a transceiver module, configured to receive traffic flow routing control information and first service type information corresponding to the traffic flow routing control information, where the first service type information includes first service category information and/or first subscriber category information; and a processing module, configured to determine, based on the first service type information, identification information of a subscriber corresponding to the first service type information, where the transceiver module is further configured to send the traffic flow routing control information and the identification information of the subscriber to a policy control network element.

With reference to the fifteenth aspect, in some implementations of the fifteenth aspect, the transceiver module is further configured to receive the identification information of the subscriber and the first service type information from an application function network element, where the identification information of the subscriber is associated with the first service type information.

According to a sixteenth aspect, a policy configuration apparatus is provided. The apparatus includes: a transceiver module, configured to send traffic flow routing control information and identification information of a user equipment group corresponding to the traffic flow routing control information to a unified data repository network element, where the user equipment group includes a subscriber.

With reference to the sixteenth aspect, in some implementations of the sixteenth aspect, the transceiver module is further configured to send an identifier of the user equipment group and identification information of the subscriber to the unified data repository network element, where the identification information of the subscriber is associated with the identifier of the user equipment group.

It should be understood that, that the identification information of the subscriber is associated with the identifier of the user equipment group may mean that the subscriber corresponding to the identification information of the subscriber belongs to the user equipment group corresponding to the identifier of the user equipment group.

According to a seventeenth aspect, a policy configuration apparatus is provided. The apparatus includes: a transceiver module, configured to: receive subscription information of user equipment from a unified data repository network element or a session management network element, where the subscription information includes second service type information; and send the subscription information to a policy control network element.

With reference to the seventeenth aspect, in some implementations of the seventeenth aspect, the transceiver module is configured to send a subscription information request message to a unified data management network element, where the subscription information request message includes an identifier of the user equipment, and the subscription information request message is used to request the subscription information of the user equipment.

According to an eighteenth aspect, a policy configuration apparatus is provided. The apparatus includes: a transceiver module, configured to receive subscription information and an identifier of a subscriber, where the subscription information includes service type information, the service type information includes service category information and/or subscriber category information, and the subscription information is associated with identification information of the subscriber; and a processing module, configured to store the subscription information and identification information of one or more subscribers.

With reference to the eighteenth aspect, in some implementations of the eighteenth aspect, the transceiver module is further configured to receive a subscription information request message from a session management network element, where the subscription information request message includes identification information of a user equipment, and the subscription information request message is used to request subscription information of the user equipment; and when the identification information of the user equipment is included in the identification information of the subscriber, the transceiver module is further configured to send the subscription information to the session management network element.

With reference to the eighteenth aspect, in some implementations of the eighteenth aspect, the subscription information further includes second application identification information and/or second application service provider identification information.

According to a nineteenth aspect, a communication apparatus is provided. The apparatus includes: a transceiver module, configured to receive traffic flow routing control information and group information corresponding to the traffic flow routing control information, where the group information includes a plurality of group identifiers; and a processing module, configured to generate, based on the traffic flow routing control information, a policy and charging control rule for a user equipment that matches the group information, where the transceiver module is further configured to send the policy and charging control rule.

With reference to the nineteenth aspect, in some implementations of the nineteenth aspect, the processing module is specifically configured to: determine, based on subscription information of the user equipment, that the user equipment matches the group information; and generate the policy and charging control rule for the user equipment based on the traffic flow routing control information.

With reference to the nineteenth aspect, in some implementations of the nineteenth aspect, the processing module is specifically configured to: when the subscription information of the user equipment includes the plurality of group identifiers in the group information, determine that the user equipment matches the group information.

With reference to the nineteenth aspect, in some implementations of the nineteenth aspect, the plurality of group identifiers in the group information have a logical relationship; and the processing module is specifically configured to: when the subscription information of the user equipment satisfies the logical relationship between the plurality of group identifiers, determine that the user equipment matches the group information.

With reference to the nineteenth aspect, in some implementations of the nineteenth aspect, the transceiver module is further configured to receive the subscription information of the user equipment from a unified data repository network element or a session management network element.

According to a twentieth aspect, a communication apparatus is provided. The apparatus includes: a transceiver module, configured to send traffic flow routing control information and group information corresponding to the traffic flow routing control information, where the group information includes a plurality of group identifiers.

With reference to the twentieth aspect, in some implementations of the twentieth aspect, the plurality of group identifiers in the group information have a logical relationship.

According to a twenty-first aspect, a communication apparatus is provided. The apparatus is configured to perform the methods provided in the first aspect to the tenth aspect. Specifically, the apparatus may include units and/or modules configured to perform the methods provided in the first aspect to the tenth aspect, for example, a processing module and/or a transceiver module (which may also be referred to as a communication module).

In an implementation, the apparatus is a network device. For example, the apparatus is a policy control network element, an application function network element, or a unified data repository network element. When the apparatus is a network device, the transceiver module may be a transceiver or an input/output interface, and the processing module may be a processor.

In another implementation, the apparatus is a chip, a chip system, or a circuit used in a network device. When the apparatus is a chip, a chip system, or a circuit used in a communication device, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

According to a twenty-second aspect, a communication apparatus is provided. The apparatus includes: a memory, configured to store a program; and a processor, configured to execute the program stored in the memory. When the program stored in the memory is executed, the processor is configured to perform the method provided in the first aspect to the tenth aspect.

According to a twenty-third aspect, this application provides a processor, configured to perform the method provided in the foregoing aspects. In a process of performing the methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the foregoing input information, the transceiver obtains/receives the foregoing information, and inputs the information into the processor. Further, after the transceiver receives the foregoing information, other processing may need to be performed on the information before the information is input into the processor.

Based on the foregoing principle, for example, that the request message is received mentioned in the foregoing method may be understood as that the processor receives the input information.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform the methods, or a processor, for example, a general-purpose processor, that executes computer instructions in the memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a twenty-fourth aspect, a computer-readable storage medium is provided. The computer-readable medium stores program code to be executed by a device, and the program code is used to perform the methods provided in the first aspect to the tenth aspect.

According to a twenty-fifth aspect, a computer program product including instructions is provided. When the computer program product runs on a computer, the computer is enabled to perform the methods provided in the first aspect to the tenth aspect.

According to a twenty-sixth aspect, a chip is provided. The chip includes a processor and a communication interface. The processor reads, through the communication interface, instructions stored in a memory, to perform the methods provided in the first aspect to the tenth aspect.

Optionally, in an implementation, the chip may further include the memory. The memory stores instructions, and the processor is configured to execute the instructions stored in the memory. When the instructions are executed, the processor is configured to perform the methods provided in the first aspect to the tenth aspect.

### BRIEF DESCRIPTION OF DRAWINGS

FIG. 1 is a schematic diagram of an architecture of a communication system applicable to embodiments of this application;
FIG. 2 is an example flowchart of a policy configuration method 200;
FIG. 3 is an example flowchart of a policy configuration method according to an embodiment of this application;
FIG. 4 is an example flowchart of another policy configuration method according to an embodiment of this application;
FIG. 5 is an example flowchart of another policy configuration method according to an embodiment of this application;
FIG. 6 is an example flowchart of still another policy configuration method according to an embodiment of this application;
FIG. 7 is an example flowchart of still another policy configuration method according to an embodiment of this application;
FIG. 8 is an example flowchart of still another policy configuration method according to an embodiment of this application;
FIG. 9 is an example flowchart of still another policy configuration method according to an embodiment of this application;
FIG. 10 is a schematic block diagram of a communication apparatus according to an embodiment of this application;
FIG. 11 is a schematic block diagram of a communication apparatus according to another embodiment of this application; and
FIG. 12 is a schematic block diagram of a communication apparatus according to still another embodiment of this application.

### DESCRIPTION OF EMBODIMENTS

To make objectives, technical solutions, and advantages of this application clearer, the following describes the technical solutions in this application with reference to the accompanying drawings. A specific operation method in a method embodiment may also be applied to an apparatus embodiment or a system embodiment. In descriptions of this application, unless otherwise specified, "a plurality of" means two or more.

In various embodiments of this application, unless otherwise specifically stated or there is a logic conflict, terms and/or descriptions in different embodiments are consistent and may be mutually referenced, and technical features in different embodiments may be combined based on an internal logical relationship thereof, to form a new embodiment.

It may be understood that various numerals used in this application are merely differentiated for ease of description, but are not used to limit the scope of this application. The serial numbers of the foregoing processes do not mean execution sequences. The execution sequences of the processes need to be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that data used in such a way are interchangeable in proper circumstances, so that the embodiments described herein can be implemented in other orders than the order illustrated or described herein. Moreover, the terms "include", "have", and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applicable to a future communication system, for example, a 6th generation mobile communication system. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

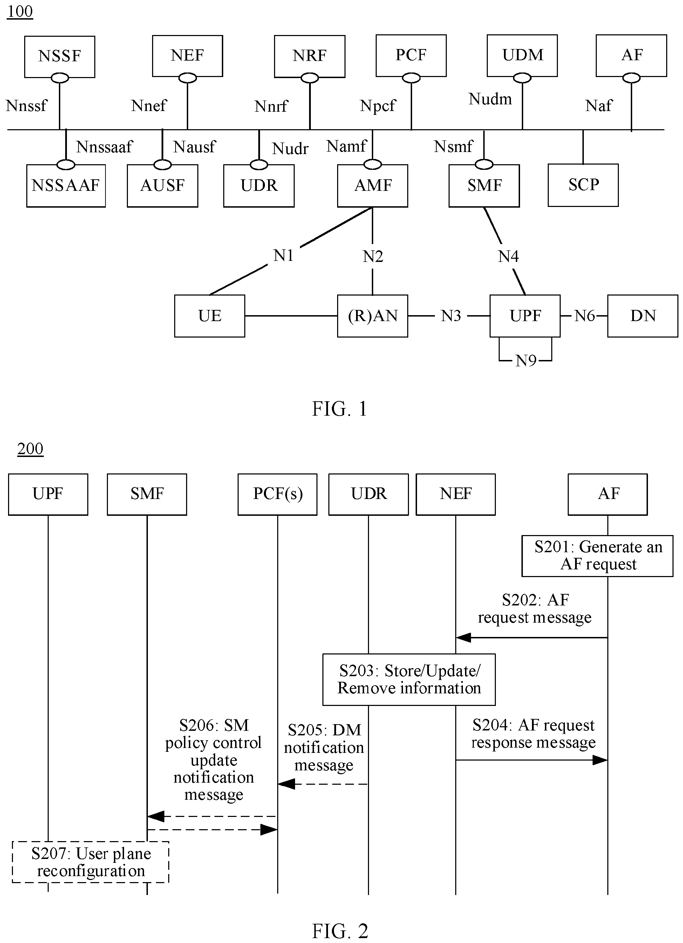

FIG. 1 is a schematic diagram of a 5th generation (5th generation, 5G) network architecture based on a service-oriented architecture.

The 5G network architecture shown in FIG. 1 may include three parts: a terminal device, a data network (data network, DN), and a carrier network. The following briefly describes functions of some network elements in the 5G network architecture.

The carrier network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a radio access network (radio access network, RAN), a user plane function (user plane function, UPF) network element, and the like. In the foregoing carrier network, a part other than the radio access network may be referred to as a core network part.
1. The terminal device (terminal device), which may also be referred to as a user equipment (user equipment, UE), is a device that has a wireless transceiver function. The terminal device may be deployed on land, including an indoor device, an outdoor device, a handheld device, or a vehicle-mounted device; may be deployed on a water surface (for example, on a ship); or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal device herein refers to a 3rd generation partnership project (3rd generation partnership project, 3GPP) terminal. For ease of description, in this application, an example in which UE represents a terminal device is used subsequently for description.
   The terminal device may establish a connection to the carrier network through an interface (for example, N1) provided by the carrier network, and use a service such as data and/or voice provided by the carrier network. The terminal device may further access the DN through the carrier network, and use a carrier service deployed on the DN and/or a service provided by a third party. The third party may be a service party other than the carrier network and the terminal device, and may provide a service such as data and/or voice for the terminal device. A specific representation form of the third party may be specifically determined based on an actual application scenario, and is not limited herein.
2. A radio access network (radio access network, RAN) network element is referred to as a RAN for short below, and corresponds to an access network device.
   The RAN is a subnet of the carrier network, and is an implementation system between a service node in the carrier network and the terminal device. To access the carrier network, the terminal device first accesses the RAN, and then may be connected to the service node in the carrier network via the RAN. ARAN device in this application is a device that provides a wireless communication function for the terminal device, and the RAN device is also referred to as an access network device. The RAN device in this application includes but is not limited to: a nextgeneration base station (gNodeB, gNB) in 5G, an evolved NodeB (evolved NodeB, eNB), a radio network controller (radio network controller, RNC), and a NodeB (NodeB, NB), a base station controller (BSC), a base transceiver station (base transceiver station, BTS), a home base station (for example, home evolved NodeB or home NodeB, HNB), a baseband unit (baseband unit, BBU), a transmission reception point (transmission reception point, TRP), a transmitting point (transmitting point, TP), a mobile switching center, and the like.
3. A user plane function (user plane function, UPF) is configured to perform packet routing and forwarding, quality of service (quality of service, QoS) processing of user plane data, and the like.
   In a 5G communication system, a user plane network element may be a user plane function (user plane function, UPF) network element. In a future communication system, a user plane network element may still be a UPF network element, or may have another name. This is not limited in this application.
4. Access and mobility management network element

The access and mobility management network element is mainly configured to perform mobility management, access management, and the like. The access and mobility management network element may be configured to implement a function, for example, access authorization/authentication, other than session management in functions of an MME.

In a 5G communication system, the access and mobility management network element may be an access and mobility management function (access and mobility management function, AMF). In a future communication system, an access and mobility management device may still be the AMF, or may have another name. This is not limited in this application.

5. A session management function (session management function, SMF) is mainly used to perform session management, user equipment internet protocol (internet protocol, IP) address assignment and management, selection and management of a user plane function, a termination point of a policy control and charging function interface, downlink data notification, and the like.

In a 5G communication system, the session management network element may be a session management function network element. In a future communication system, the session management network element may still be an SMF network element, or may have another name. This is not limited in this application.

6. A policy control function (policy control function, PCF) is a unified policy framework for guiding network behavior, and provides policy rule information and the like for a control plane function network element (for example, the AMF or the SMF).

In a 4G communication system, the policy control network element may be a policy and charging rules function (policy and charging rules function, PCRF) network element. In a 5G communication system, the policy control network element may be a policy control function PCF network element. In a future communication system, the policy control network element may still be a PCF network element, or may have another name. This is not limited in this application.

7. An application function (application function, AF) is used to perform applicationaffected data routing, access a network exposure function network element in a wireless manner, or interact with a policy framework to perform policy control, and the like.

In a 5G communication system, an application network element may be an application function network element. In a future communication system, an application network element may still be an AF network element, or may have another name. This is not limited in this application.

8. A unified data management (unified data management, UDM) is used for UE identifier processing, access authentication, registration, mobility management, and the like.

In a 5G communication system, a data management network element may be a unified data management network element. In a 4G communication system, a data management network element may be a home subscriber server (home subscriber server, HSS) network element. In a future communication system, a unified data management may still be a UDM network element, or may have another name. This is not limited in this application.

9. An authentication server function (authentication server function, AUSF) is used to provide an authentication service, generate a key to implement two-way authentication for a user equipment, and support a unified authentication framework.

In a 5G communication system, the authentication server may be an authentication server function network element. In a future communication system, an authentication server function network element may still be an AUSF network element, or may have another name. This is not limited in this application.

10. The data network (data network, DN) is a network located outside the carrier network. The carrier network may access a plurality of DNs, and a plurality of services may be deployed on the DN, to provide a service such as data and/or voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1, Nausf, Nnef, Npcf, Nudm, Naf, Namf, Nsmf, N1, N2, N3, N4, and N6 are interface sequence numbers. For meanings of the interface sequence numbers, refer to meanings defined in the 3GPP standard protocol. This is not limited herein.

In the network architecture shown in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identification information of an N3 connection, data buffering indication information, and a downlink data notification message. The UPF and the DN may interact with each other through an N6 interface, and the N6 interface may be for transmitting user plane data and the like. A relationship between another interface and each of the network elements is shown in FIG. 1. For brevity, details are not described herein.

It should be understood that the foregoing network architecture applied to embodiments of this application is merely an example of a network architecture described from the perspective of a service-based architecture, and a network architecture applicable to embodiments of this application is not limited thereto. Any network architecture that can implement the functions of the foregoing network elements is applicable to embodiments of this application.

It should be further understood that the AMF, the SMF, the UPF, the network slice selection function network element (network slice selection function, NSSF) network element, the NEF, the AUSF, the NRF, the PCF, and the UDM shown in FIG. 1 may be understood as network elements configured to implement different functions in a core network, for example, may be combined as required to form a network slice. The network elements of the core network may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in a 5G network and another future network. For example, in a 6G network, a part or all of the foregoing network elements may still use terms in 5G, or may use other names. The names of the interfaces between the network elements in FIG. 1 are merely examples. In a specific implementation, the name of the interface may be another name. This is not specifically limited in this application. In addition, names of messages (or signaling) transmitted between the foregoing network elements are merely examples, and do not constitute any limitation on functions of the messages.

It may be understood that the network elements or functions may be network elements in a hardware device, may be software functions running on dedicated hardware, or may be virtualized functions instantiated on a platform (for example, a cloud platform). For ease of description, in this application, an example in which the network device is an access and mobility management function AMF and the base station is a radio access network RAN is used for description.

It should be understood that the foregoing network architecture applied to embodiments of this application is merely an example, and a network architecture applicable to embodiments of this application is not limited thereto. Any network architecture that can implement the functions of the foregoing network elements is applicable to embodiments of this application.

A network architecture and a service scenario that are described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

Various aspects or features in embodiments of this application may be implemented as methods, apparatuses, or products using standard programming and/or engineering technologies. The term "product" used in this application covers a computer program accessible from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media for storing information. The term "machine-readable media" may include but is not limited to a wireless channel, and various other media that can store, contain, and/or carry instructions and/or data.

To facilitate understanding of embodiments of this application, terms or technologies in this application are first briefly described.

### 1. 5G architecture

An evolved packet system (evolved packet system, EPS) defined in the 3rd generation partnership project (3rd generation partnership project, 3GPP) includes a 5G network architecture based on a service-oriented interface or a 5G network architecture based on a point-to-point interface. A 5G network may be divided into three parts: a UE, a DN, and a carrier network.

The carrier network may include one or more of the network elements shown in FIG. 1 other than the UE and the DN, or may further include another network element. The 5G network structure is not limited in this application. For details, refer to descriptions in the current related technology.

### 2. Edge computing

Rapid development of mobile communication promotes continuous emergence of various new services. In addition to the traditional mobile broadband and internet of things, mobile communication has created many new application fields, such as an augmented reality (augmented reality, AR) technology, a virtual reality (virtual reality, VR) technology, an internet of vehicles technology, industrial control, and an IoT. In addition, mobile communication also has higher requirements on network bandwidth and a delay. This further increases network load.

In LTE, a traditional centralized anchor deployment mode is increasingly difficult to support a fast-growing mobile service traffic model. In a network in which anchor gateways are deployed in a centralized manner, increased traffic is finally concentrated in the gateways and a core equipment room. This imposes higher requirements on backhaul network bandwidth, an equipment room throughput, and gateway specifications. In addition, a long-distance backhaul network and a complex transmission environment from an access network to the anchor gateway cause a high delay and high jitter of user packet transmission.

Based on the foregoing situation, the industry proposes edge computing (edge computing, EC). Edge computing moves a user plane network element and a service processing capability downwards to a network edge, to implement distributed local processing of service traffic. This avoids excessive traffic concentration and greatly lowers requirements for specifications of the core equipment room and centralized gateway. In addition, edge computing also shortens the distance of the backhaul network, reduces the end-to-end transmission delay and jitter of user packets, and makes deployment of an ultra-low delay service possible.

In comparison with a DN network, an edge computing platform is deployed at a sink UPF (namely, a local UPF), and the DN network is deployed at a remote UPF. In comparison with a path (as shown in the solid line) for a UE to access the DN, a path (as shown in the dotted line) for the UE to access the edge computing platform is greatly shortened. Therefore, the edge computing technology can provide users with low-delay and high-bandwidth services.

### 3. Mobile network roaming

Roaming (roaming) refers to a situation in which a mobile user of a carrier A accesses a network of a carrier B. For example, if a user of China Mobile accesses a network of China Unicom, the user of China Mobile is referred to as roaming to the network of China Unicom.

A home network of a user is referred to as a hometown network of the user, and is also referred to a home public land mobile network (home public land mobile network, HPLMN). A network to which the user roams is referred to as a visited network of the user, and is also referred to as a visited public land mobile network (visited public land mobile network, VPLMN).

In a roaming scenario, there are two types of protocol data unit (protocol data unit, PDU) sessions (Sessions): a home routed PDU session (home routed PDU Session, HR PDU Session) and a local breakout PDU session (local breakout PDU Session, LBO PDU session). A difference between the two types of PDU sessions lies in whether the PDU session needs to be connected to a UPF in a hometown network.

### 4. Group management

A group (group) usually includes a plurality of members. Managing members in a group facilitates management.

In a 5G network, a group is identified by using a group identifier (group Identifier, group ID). A group may include a plurality of group members (all the members belong to a same PLMN).

When creating a group, an AF provides an external group identifier (External Group ID) to identify the group on the AF side and provides a list of UE members in the group.

The group information provided by the AF is finally sent to a UDM. The UDM generates an internal group ID corresponding to the external group ID. The ID is used to identify the group in a 5GC network. The UDM stores a group member list corresponding to the internal group ID.

The foregoing describes, with reference to FIG. 1, a scenario to which embodiments of this application can be applied, and further briefly describes basic concepts in this application. The following describes in detail, with reference to the accompanying drawings, a method for policy configuration provided in this application.

A specific structure of an execution body of the method provided in embodiments of this application is not particularly limited in the following embodiments provided that communication can be performed according to the method provided in embodiments of this application by running a program that records code of the method provided in embodiments of this application. For example, the method provided in embodiments of this application may be performed by a core network device, or a functional module that is in the core network device and that can invoke and execute the program.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners. For example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all the information may be identified and enabled in a unified manner, to reduce enabling overheads caused by enabling same information separately.

Second, "first", "second", and various numerical numbers (for example, "#1" and "#2") in this application are merely for ease of description, and for distinguishing objects, but are not intended to limit the scope of embodiments of this application, for example, are used to distinguish between different messages, but are not for describing a particular order or sequence. It should be understood that the objects described in such a way are interchangeable in a proper circumstance, so that a solution other than embodiments of this application can be described.

Third, the terms "include", "have", and any other variants mean to cover non-exclusive inclusion, for example, a process, method, system, product, or device that includes a list of steps or units is not necessarily limited to those expressly listed steps or units, but may include other steps or units not expressly listed or inherent to such a process, method, product, or device.

Fourth, in this application, "pre-configured" may include "predefined", for example, defined in a protocol. "Predefined" may be implemented in a manner of storing corresponding code, a table, or other manners for indicating related information in a device (for example, including network elements) in advance. A specific implementation of "predefined" is not limited in this application.

Fifth, "store" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Sixth, "protocols" in embodiments of this application may be standard protocols in the communication field, for example, may include a 5G protocol, a new radio (new radio, NR) protocol, and a related protocol applied to a future communication system. This is not limited in this application.

The following describes in detail the policy configuration method provided in embodiments of this application by using interaction between network elements as an example. It should be understood that terms and steps in embodiments of this application may be mutually referenced.

The following describes a policy configuration method 200 with reference to FIG. 2. The method 200 includes the following steps.

S201: Generate an AF request.

For example, an AF generates an AF request message (Creation of AF request). The request message may include the following information elements: target UE related information (for example, a target UE identifier (Target UE Identifier)), an edge computing/application server address list (DNAIs) and information (a DNN, S-NSSAI, an Application ID, or an AF-service-Identifier) used to identify traffic, a data path QoS monitoring request, and the like. The target UE related information may be an individual UE (individual UE), and may be identified by using a GPSI, an IP address/prefix, or a MAC address; may be a group of UEs (a group of UEs), and may be identified by using an external group ID; or may be any UE (any UE) identified by using a combination of a DNN, S-NSSAI, and a DNAI. For specific content, refer to an existing protocol. This is not specifically limited in this application.

The AF may further include traffic flow routing control information in the AF request message. In this case, the AF may include an identifier of a group (group ID) in the AF request message, to provide an access control policy for a plurality of UEs in the group.

S202: The AF sends the AF request message to an NEF.

For example, the AF invokes an Nnef_TrafficInfluence service to send generated application layer information to the NEF. Main operations include request creation, update, and deletion.

S203: A UDR and the NEF store/update/remove the information.

For example, when the AF invokes an Nnef_TrafficInfluence_Create/Updating service, the NEF stores the received application layer information in the UDR. When the AF invokes an Nnef_TrafficInfluence_Delete service, the NEF deletes the application layer information from the UDR.

S204: The NEF sends an AF request response message to the AF.

The NEF sends the response message to the AF.

S205: The UDR sends a DM notification message to a PCF.

If the PCF subscribes to a modification in the AF request, the UDR sends, to the PCF, an Nudr_DM_Notify notification indicating data modification. The PCF determines servicerelated PDU session establishment and a corresponding policy based on the application layer information and request.

S206: The PCF sends an SM policy control update notification to an SMF.

After generating the related policy, the PCF invokes an Npcf_SMPolicyControl_UpdateNotify service to send a policy update to the SMF/an I-SMF. The message may carry an ID of a group, indicating that the policy is for a plurality of UEs in the group.

S207: The SMF and a UPF perform traffic flow routing reconfiguration (Traffic Routing Reconfiguration).

After receiving the related policy from the PCF, the SMF performs traffic flow routing reconfiguration with the UPF according to the related policy.

According to the foregoing solution, the AF may define a policy by using a group-based mechanism, to be specific, the AF may predefine a group and a group member included in the group, and then use a group ID to represent the group member. However, the group-based mechanism can only be used for a non-roaming (non-roaming) scenario in a same PLMN, in other words, the group can only include UEs in a same PLMN. Therefore, the AF cannot define a policy for UEs in different PLMNs. For example, the AF cannot perform access policy control for both a roaming subscriber and a non-roaming subscriber.

In view of this, the following describes in detail the policy configuration method provided in embodiments of this application with reference to the accompanying drawings. Embodiments of this application may be applied to the network architecture shown in FIG. 1. This is not limited.

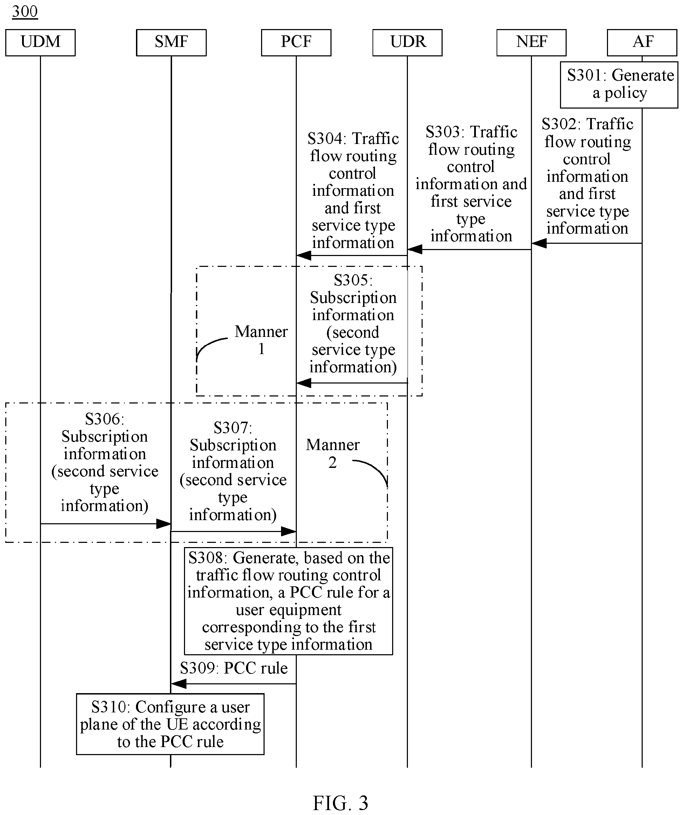

FIG. 3 is an example flowchart of a policy configuration method 300 according to an embodiment of this application. First, a possible implementation (denoted as a solution A) provided in an embodiment of this application is described with reference to the method 300. It can be learned from FIG. 3 that the method 300 includes the following steps.

S301: An AF generates a policy.

For example, the AF generates a policy. The policy may be an application-specific policy, and the policy may also be referred to as an access control policy or a traffic offload policy (traffic offload policy). Specifically, the policy may be, for example, allowing a member belonging to a group to access edge control.

S302: The AF sends traffic flow routing control information and first service type information to an NEF.

For example, the AF may invoke an Nnef_TrafficInfluence service to send the traffic flow routing control information and the first service type (service type) information that correspond to the policy to the NEF, where the traffic flow routing control information corresponds to the first service type information.

The traffic flow routing control information may be information used to control/influence traffic flow routing. For example, the traffic flow routing control information is used to route a traffic flow to local access of a data network. For example, the traffic flow routing control information may include service descriptor information (for example, an application ID, an FQDN, an IP 5-tuple), application location information (for example, a DNAI), target UE identification information (for example, a UE ID or a group ID), and N6 interface service routing requirement information. It should be understood that, in different scenarios, the traffic flow routing control information may alternatively have another name. For example, the traffic flow routing control information may also be referred to as access control policy information or traffic routing control information. This is not limited in this application.

The "traffic flow" in this application may also be referred to as "traffic". For example, the "traffic flow routing control information" may also be referred to as "traffic routing control information", and the two may be equivalently exchanged. The "traffic flow routing control information" may also be referred to as application function request information.

The first service type information may be subscription information (for example, video very important person (Video VIP) subscription information) between a user equipment and a carrier (for example, a network carrier), or between the user equipment and an application service provider (for example, companies that provide various internet application services, such as Google, Facebook, and Tencent). Operators or application service providers may provide different services, policies, and the like for a subscriber based on the subscription information. For example, the first service type information may include information about a service or an application allowed to be used by a user, for example, service identification information, service name information, service range information, service category information, allowed service category information, allowed service name information, allowed service range information, application descriptor information (a fully qualified domain name (fully qualified domain name, FQDN), an application identifier (application identifier, App ID), a 5-tuple, and the like), subscriber level information, subscriber category information, and identification information of a group to which a user belongs.

The first service type information includes first category information and/or first subscriber category information. The first service category information may be information about a service or an application that can be used by the user equipment, for example, information about a service or an application that a user is allowed to use (for example, service identification information, service name information, service range information, service category information, allowed service category information, allowed service name information, allowed service range information, and application descriptor information (an FQDN, an App ID, or a 5-tuple)). The first subscriber category information may be information about a service subscribed by the user equipment, subscriber level information (for example, gold, silver, and bronze users), subscriber category information, and identification of a group to which a user belongs.

It should be understood that, in an implementation, the first service type information may be included in the traffic flow routing control information as a part of the traffic flow routing control information; or the first service type information may not be included in the traffic flow routing control information.

It should be understood that the foregoing descriptions of the terms such as the traffic flow routing control information and the first service type information are also applicable to other steps in embodiments of this application or explanations of related terms in other embodiments. Details are not described again subsequently.

Optionally, the message may further include a target UE identifier (Target UE Identifier), and the AF sets the target UE identifier to any UE (any UE) or a group ID.

Optionally, the message may further include first application identification information and/or first application service provider identification information. The first application identification information and the first application service provider identification information correspond to the first service type information. It should be understood that the AF may send only one of the first application identification information and the first application service provider identification information.

The first application identification information is used to identify an application, and the first application service provider identification information is used to identify an application service provider. The first application identification information may be, for example, an application identifier (application identifier, APP ID), FQDN information, or IP 5-tuple information. The application service provider identifier may be, for example, an application service provider identifier (application service provider identifier, ASP ID) or an application service provider name, and is specifically, for example, Tencent, Google, WeChat, or YouTube.

S303: The NEF sends the traffic flow routing control information and the first service type information to a UDR. Correspondingly, the UDR receives the traffic flow routing control information and the first service type information from the NEF.

S304: The UDR sends the traffic flow routing control information and the first service type information to a PCF. Correspondingly, the PCF receives the traffic flow routing control information and the first service type information from the UDR.

Optionally, if the AF further sends the first application identification information and/or the first application service provider identification information to the NEF, the NEF further sends the first application identification information and/or the first application service provider identification information to the UDR. Correspondingly, the UDR sends the first application identification information and/or the first application service provider identification information to the PCF.

For example, the NEF invokes an Nnef_TrafficInfluence service to send the traffic flow routing control information and the first service type information to the UDR, where the target UE identifier is set to any UE or a group ID. Optionally, the message further includes the first application identification information and/or the first application service provider identification information.

After receiving the traffic flow routing control information and the first service type information (optionally further including the first application identification information and/or the first application service provider identification information) from the NEF, the UDR sends the received traffic flow routing control information and first service type information to the PCF by using an Nudr_DM_Notify service, where the target UE identifier is set to any UE or a group ID, and optionally, the message further includes the first application identification information and/or the first application service provider identification information.

Correspondingly, after the PCF receives the traffic flow routing control information and the first service type information (optionally further including the first application identification information and/or the first application service provider identification information) from the UDR, the PCF may store the information.

It should be understood that S301 to S304 may be separately performed, or may be performed in combination with subsequent steps (S305 to S310). This is not limited in this application. When S301 to S304 are performed in combination with the subsequent steps, the subsequent steps may be performed immediately after S304 is performed, or may be performed after a period of time after S304 is performed. This is not limited in this application.

Further, the PCF obtains subscription information of the user equipment.

In an implementation (denoted as a manner 1), the PCF obtains the subscription information of the user equipment from the UDR.

S305: The UDR sends the subscription information of the user equipment to the PCF, where the subscription information includes second service type information and an identifier of the user equipment (denoted as a UE ID).

It should be understood that the subscription information of the user equipment may be subscription information between the user equipment and a carrier, or may be subscription information between the user equipment and an application service provider. The subscription information between the user equipment and the application service provider may also be referred to as "application data".

The second service type information includes second service category information and/or second subscriber category information. For explanations of a second service type information, refer to the foregoing explanations of the first service type information. Details are not described herein again.

Optionally, the subscription information further includes second application identification information and/or second application service provider identification information.

It should be understood that the UDR pre-stores the subscription information of the user equipment. A specific manner is not limited herein.

In another implementation (denoted as a manner 2), the PCF obtains the subscription information of the user equipment from a UDM through an SMF.

S306: The SMF receives the subscription information of the user equipment from the UDM, where the subscription information includes second service category information and a UE ID of the user equipment. For example, when one user equipment accesses a network, the SMF may request, from the UDM, to obtain subscription information of the user equipment. After finding the subscription information of the user equipment based on the request of the SMF, the UDM sends the subscription information of the user equipment to the SMF. For example, the UDM receives a subscription information request message from the SMF, where the subscription information request message includes a UE ID, the UE ID may be, for example, an SUPI, and the subscription information request message is used to request the subscription information of the user equipment. The UDM retrieves the subscription information of the user equipment in a local storage based on the UE ID. After the UDM retrieves the subscription information of the user equipment, the UDM sends the subscription information of the UE to the SMF, where the subscription information includes the second service type information of the UE. Optionally, the subscription information further includes second application identification information and/or second application service provider identification information.

It should be understood that the UDM pre-stores the subscription information of the user equipment. A specific manner is not limited herein.

S307: The SMF sends the subscription information to the PCF, where the subscription information includes the second service type information, and optionally further includes the second application identification information and/or the second application service provider identification information.

For example, after obtaining the subscription information of the user equipment through the UDM, the SMF invokes an Npcf_SMPolicyControl service to send the subscription information to the PCF.

S308: The PCF generates, based on the traffic flow routing control information, a PCC rule (a policy and charging control rule) for a user equipment corresponding to the first service type information.

For example, after obtaining subscription information of the user equipment, the PCF determines, based on the subscription information of the user equipment, whether the user equipment is the user equipment corresponding to the first service type information. If the user equipment is the user equipment corresponding to the first service type information, the PCF generates the PCC rule for the user equipment based on the traffic flow routing control information. That the PCF generates the PCC rule for the user equipment based on the traffic flow routing control information may mean that the PCF generates the PCC rule for a session (for example, a PDU session) of the user equipment based on the traffic flow routing control information.

It should be understood that "user equipment corresponding to the first service type information" may be user equipment that subscribes to the first service type information, or user equipment that is indicated in application data and that has a correspondence with the first service type information.

It should be understood that in this application, the PCC rule is used to control routing of a traffic flow. The PCC rule includes traffic flow steering control information, for example, may include traffic flow identification information, DNAI information, traffic flow steering policy information, and N6 interface traffic flow routing information.

It should be understood that, in addition to the traffic flow routing control information, the PCF may further need other information to generate the PCC rule. This is not limited in this application.

It should be further understood that the user equipment corresponding to the first service type information may be the user equipment that subscribes to the first service type information, or the user equipment that is in the application data and that has the correspondence with the first service type information. The user equipment that subscribes to the first service type information may be user equipment that subscribes to the first service type information from a carrier, or may be user equipment that subscribes to the first service type information from an application.

The following describes, with reference to an example, a specific implementation in which the PCF determines whether the user equipment is the user equipment corresponding to the first service type information.

The PCF determines whether the second service type information matches the first service type information, and if the second service type information matches the first service type information, the PCF determines that the user equipment is the user equipment corresponding to the first service type information.

That the second service type information matches the first service type information may mean that the second service type information is included in the first service type information.

Optionally, the PCF may further determine whether the second application identification information and/or the second application service provider identification information match/matches the first application identification information and/or the first application service provider identification information, and if the second application identification information and/or the second application service provider identification information match/matches the first application identification information and/or the first application service provider identification, the PCF determines that the user equipment is the user equipment corresponding to the first service type information.

That the second application identification information and/or the second application service provider identification information match/matches the first application identification information and/or the first application service provider identification information may mean that the second application identification information and/or the second application service provider identification information are/is the same as the first application identification information and/or the first application service provider identification information.

A specific manner in which the PCF generates the PCC rule based on the traffic flow routing control information is not limited in this application. All PCC rule generation manners in the conventional technology or that can be figured out by a person skilled in the art should fall within the protection scope of this application.

S309: The PCF sends the PCC rule to the SMF.

For example, after generating the PCC rule for the user equipment, the PCF sends the PCC rule to the SMF. For example, the PCF invokes an Npcf_SMPolicyControl service to send the PCC rule to the SMF. It should be understood that the message further carries the UE ID.

S310: The SMF configures a user plane of the UE according to the PCC rule.

For example, after receiving the PCC rule for the user equipment from the PCF, the SMF generates a corresponding user plane configuration, that is, executes the policy. A specific manner is not limited in this application.

In the foregoing solution, when providing the traffic flow routing control information to the PCF through the UDR, the AF also provides service type information (namely, the first service type information) corresponding to the traffic flow routing control information. Therefore, when the PCF determines that service type information in subscription information of a user equipment is the same as the service type information corresponding to the traffic flow routing control information, the PCF may generate the PCC rule for the user equipment by using the traffic flow routing control information.

Based on the foregoing solution, a network device configures the access control policy for a plurality of different users, and the plurality of different users may belong to users in different PLMNs. In other words, in the policy configuration method provided in this embodiment of this application, the access control policy may be configured for both a roaming subscriber and a non-roaming subscriber.

With reference to the example flowchart of the method 300 in FIG. 3, the following describes another possible implementation (denoted as a solution B) provided in an embodiment of this application.

It should be understood that, in the solution B, S301 to S307 are similar to S301 to S307 in the solution A, and therefore are not described again. However, it should be noted that in the solution B, the first service type information includes a plurality of pieces of service type information. It should be understood that, for the service type information herein, refer to the explanation of the first service type information in the foregoing embodiment, and details are not described herein again. To be specific, the first service type information may be a set of a plurality of pieces of service type information, and each of the plurality of pieces of service type information herein may include first service category information and/or first subscriber category information. However, it should be understood that first service category information and/or first subscriber category information included in different service type information may be the same or different, which is not limited in this application. For example, the first service type information includes a service category #1 and a service category #2; or the first service type information is a logical combination of a plurality of pieces of service type information, for example, the first service type information is the service category #1 OR the service category #2 or the service category #1 AND the service category #2.

S308: The PCF generates, based on the traffic flow routing control information, a policy and charging control rule for a user equipment corresponding to the first service type information.

For example, after obtaining subscription information of the user equipment, the PCF determines, based on the subscription information of the user equipment, whether the user equipment is the user equipment corresponding to the first service type information. If the user equipment is the user equipment corresponding to the first service type information, the PCF generates the policy and charging control rule (the PCC rule) for the user equipment based on the traffic flow routing control information. That the PCF generates the PCC rule for the user equipment based on the traffic flow routing control information may mean that the PCF generates the PCC rule for a PDU session of the user equipment based on the traffic flow routing control information.

The following describes, with reference to examples, specific implementations in which the PCF determines whether the user equipment is the user equipment corresponding to the first service type information.

The PCF determines whether the second service type information matches the first service type information, and if the second service type information matches the first service type information, the PCF determines that the user equipment is the user equipment corresponding to the first service type information.

In a first implementation, the first service type information includes a plurality of pieces of service type information. In this implementation, that the second service type information matches the first service type information may mean that the second service type information includes the plurality of pieces of service type information in the first service type information, or the second service type information includes at least one of the plurality of pieces of service type information in the first service type information. For example, the first service type information includes a service category #1 and a service category #2. When the second service type information includes the service category #1 and the service category #2, it indicates that the second service type information matches the first service type information; or when the second service type information includes at least one or both of the service category #1 and the service category #2, it indicates that the second service type information matches the first service type information.

In a second implementation, the first service type information is a logical combination of a plurality of pieces of service type information. In this implementation, that the second service type information matches the first service type information may mean that the second service type information satisfies the logical combination of the plurality of pieces of service type information.

For example, if the first service type combination information is a service category #1 AND a service category #2, when the second service type information includes both the service category #1 and the service category #2, it indicates that the second service type information matches the logical combination of the plurality of pieces of service type information. For another example, if the first service type combination information is the service category #1 OR the service category #2, when the second service type information includes at least one of the service category #1 and a service category #3, it indicates that the second service type information matches the logical combination of the plurality of pieces of service type information.

S309 and S310 in the solution B are similar to S309 and S310 in the solution A, and details are not described herein again.

Based on the foregoing solution, the policy control network element may generate, based on the traffic flow routing control information, the policy and charging control rule for the user equipment corresponding to the first service type information. Therefore, in the foregoing solution, the policy may be configured for one or more users corresponding to the first service type information. For example, the policy may be configured for users belonging to different PLMNs. Therefore, policy configuration efficiency can be improved and resources can be saved. With reference to the first aspect, in some implementations of the first aspect, the user equipment corresponding to the first service type information includes a roaming user equipment and a non-roaming user equipment.

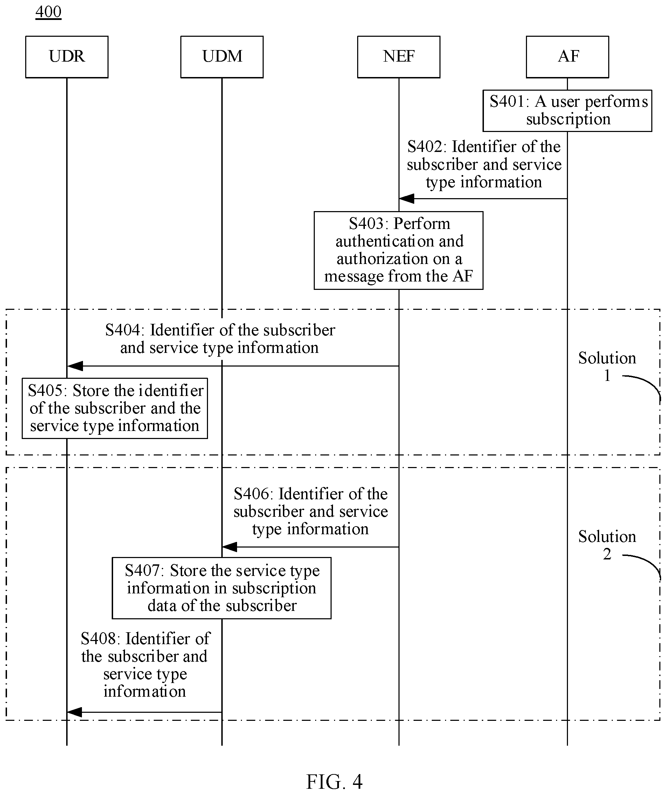

FIG. 4 is an example flowchart of a policy configuration method 400 according to an embodiment of this application. It can be learned from FIG. 4 that the method 400 includes the following steps.

S401: A user performs subscription.

For example, a carrier or an application service provider performs application layer service subscription with one or more users.

S402: An AF sends identification information of the subscriber and service type information to an NEF. Correspondingly, the NEF receives the identification information of the subscriber and the service type information from the AF.

The identification information of the subscriber includes one or more identifiers (Subscriber ID(s)) of one or more subscribers. For example, after one or more users subscribe to an application, the AF may invoke Nnef_ParameterProvision to send identification information of the subscriber and service type information corresponding to the subscription to the NEF.

In this application, a "subscriber" may also be referred to as a "user equipment", and the two are interchangeable. For example, an "identifier of a subscriber" may also be referred to as an "identifier of a user equipment", "identification information of a subscriber" may also be referred to as "identification information of a user equipment", and a "subscriber group" may also be referred to as a "user equipment group".

Optionally, the AF may further send application identification information (for example, an APP ID) and/or application service provider identification information (for example, an ASP ID) to the NEF.

Optionally, the AF may further send validity period information to the NEF, where a validity period may be a subscription validity period.

S403: The NEF performs authentication and authorization on a message from the AF.

For example, the NEF performs authentication and authorization on the message from the AF to ensure that the AF has permission to perform related operations.

After the NEF authenticates and authorizes the message from the AF, the NEF sends received application subscription information to a UDR or a UDM. The following separately provides descriptions by using examples.

In an implementation (denoted as a solution 1), the AF sends the application subscription information to the UDR.

S404: The NEF sends the identification information of the subscriber and the service type information corresponding to the identification information of the subscriber to the UDR. Correspondingly, the UDR receives the identification information of the subscriber and the service type information from the NEF.

Optionally, the NEF may further send the application identification information and/or the application provider identification information to the UDR.

Optionally, the NEF may further send the validity period information to the UDR.

S405: The UDR stores the identification information of the subscriber and the service type information.

For example, after receiving the identification information of the subscriber and the service type information from the NEF, the UDR locally stores the identification information of the subscriber and the service type information.

Optionally, if the UDR receives the application identification information and/or the application provider identification information, or the validity period information from the NEF, the UDR also locally stores the information.

In another implementation (denoted as a solution 2), the AF sends the application subscription information to the UDM.

S406: The NEF sends the identification information of the subscriber and the service type information corresponding to the identification information of the subscriber to the UDM. Correspondingly, the UDM receives the identification information of the subscriber and the service type information from the NEF.

Optionally, the NEF may further send the application identification information and/or the application provider identification information to the UDM.

Optionally, the NEF may further send the validity period information to the UDM.

S407: The UDM stores the ASP ID/APP ID, the service type information, and the validity period in subscription data of the subscriber.

For example, after receiving the identification information of the subscriber and the service type information from the NEF, the UDM stores the service type information in the subscription data (Subscription data) of the subscriber (Subscriber(s)) corresponding to the identification information of the subscriber (Subscriber ID(s)).

Optionally, if the UDM receives the application identification information and/or the application provider identification information, or the validity period information from the NEF, the UDM also stores the information in the subscription data of the subscriber corresponding to the identification information of the subscriber.

Optionally, in S408, the UDM sends the identification information of the subscriber and the service type information to the UDR.

Optionally, the UDM may send, to the UDR, the information received from the NEF, to store a parameter of the information in a database of the UDR.

It should be understood that the method 400 may be independently implemented, or may be implemented in combination with the method 300. For example, the method 400 may be used as a preparation solution of the method 300, and is performed before the method 300. This is not limited in this application.

In the foregoing solution, after the user performs subscription, the subscription information may be sent to the UDM/UDR through the AF. Correspondingly, the UDM/UDR may store the received subscription information of the user. In this way, a PCF may subsequently determine, based on a parameter in the subscription information of the user, whether a corresponding PCC rule can be generated for the user, to configure the policy for a plurality of users.

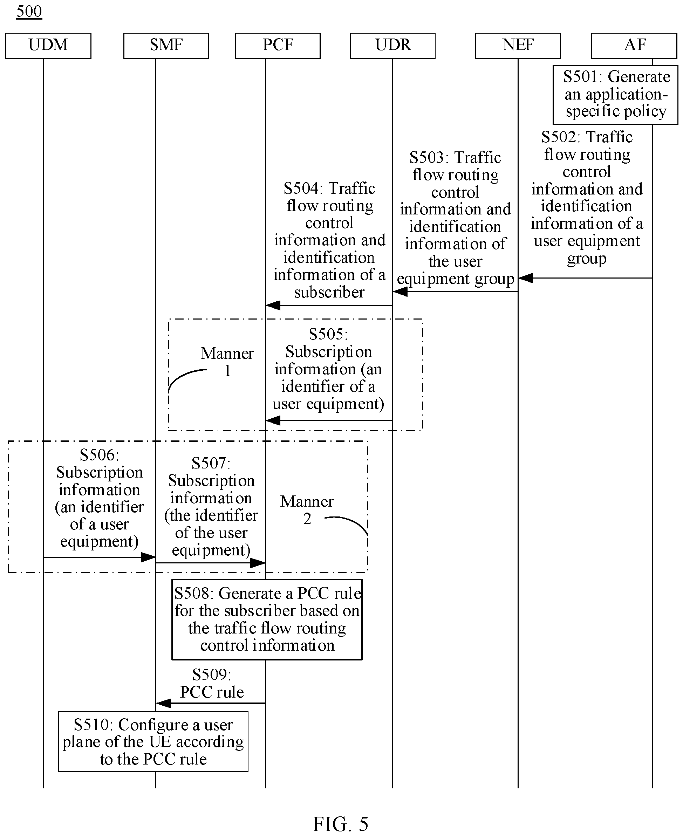

FIG. 5 is an example flowchart of a policy configuration method 500 according to an embodiment of this application. It can be learned from FIG. 5 that the method 500 includes the following steps.

S501: An AF generates an application-specific policy.

For example, the AF may generate the application-specific policy, and the policy may also be referred to as an access control policy or a traffic offload policy (traffic offload policy). Specifically, the policy may be, for example, allowing a member belonging to a group to access edge control.

S502: The AF sends traffic flow routing control information and identification information of a user equipment group to an NEF.

For example, the AF may invoke an Nnef_TrafficInfluence service to send, to the NEF, the traffic flow routing control information and the identification information of the user equipment group that correspond to the policy. The identification information of the user equipment group may include an identifier that identifies the user equipment group, the user equipment group includes one or more subscribers, and the identifier of the user equipment group may be, for example, referred to as a group identifier (group ID) or an external group identifier (external group ID). The identification information of the user equipment group may be used to index information in a UDR.

It should be understood that, in embodiments of this application, a user equipment group may also be referred to as a subscriber group, and a subscriber may also be referred to as a user equipment. To be specific, names of related terms are not limited in this application. In different scenarios, similar names may be used for mutual replacement. All expressions that can be understood or figured out by a person of ordinary skill in the art shall fall within the protection scope of embodiments of this application.

Optionally, the message may further carry first application identification information and/or first application service provider identification information. The first application identification information and the first application service provider identification information correspond to first service type information. It should be understood that the AF may send only one of the first application identification information and the first application service provider identification information.

S503: The NEF sends the traffic flow routing control information and the identification information of the user equipment group to the UDR. Correspondingly, the UDR receives the traffic flow routing control information and the identification information of the user equipment group from the NEF.

For example, the NEF sends, to the UDR, the information received from the AF. For example, the NEF invokes an Nnef_TrafficInfluence service to send the received traffic flow routing control information and identification information of the user equipment group to the UDR.

Optionally, if the NEF further receives a first application identifier and/or a first application service provider identifier, the NEF further sends the first application identifier and/or the first application service provider identifier to the UDR.

S504: The UDR sends the traffic flow routing control information and identification information of a subscriber to a PCF.

For example, the UDR determines, based on the identification information of the user equipment group, identification information of one or more subscribers corresponding to the identification information of the user equipment group. The one or more subscribers may be one or more subscribers belonging to the user equipment group, and the identification information of the one or more subscribers may be a set of one or more identifiers (Subscriber ID(s)) of the one or more subscribers. Then, the UDR sends the traffic flow routing control information and the identification information of the one or more subscribers to the PCF. For example, the UDR sends the traffic flow routing control information and the identification information of the one or more subscribers to the PCF by using a Nudr_DM_Notify message.

It should be understood that, before the foregoing solution, the UDR pre-stores an association relationship between the identification information of the user equipment group and the identification information of the one or more subscribers. After an ASP subscribes to the user, the UDR may receive, from the NEF, and store the identification information of the user equipment group and the identification information of the one or more subscribers. A specific implementation is not specifically limited in this embodiment.

Correspondingly, after the PCF receives the traffic flow routing control information and the identification information of the subscriber from the UDR, the PCF may store the information.

It should be understood that the identification information of the subscriber may correspond to the traffic flow routing control information. That the traffic flow routing control information corresponds to the identification information of the subscriber means that the traffic flow routing control information is associated with the identification information of the subscriber, the traffic flow routing control information is used to generate a policy and charging control rule for a user equipment corresponding to the identification information of the subscriber, or the traffic flow routing control information corresponds to the user equipment group in which the subscriber in the identification information of the subscriber is located.

It should be understood that S501 to S504 may be separately performed, or may be performed in combination with subsequent steps (S505 to S510). This is not limited in this application. When S501 to S504 are performed in combination with the subsequent steps, the subsequent steps may be performed immediately after S504 is performed, or may be performed after a period of time after S504 is performed. This is not limited in this application.

Further, the PCF obtains subscription information of the user equipment.

In an implementation (denoted as a manner 1), the PCF obtains the subscription information of the user equipment from the UDR.

S505: The UDR sends the subscription information of the user equipment to the PCF, where the subscription information includes an identifier of the user equipment, and the identifier of the user equipment may be, for example, a GPSI of the user equipment. Correspondingly, the UDR receives the subscription information of the user equipment from the PCF.

Optionally, the subscription information further includes second application identification information and/or second application service provider identification information.

It should be understood that the UDR pre-stores the subscription information of the user equipment that subscribes to the ASP. A specific manner is not limited herein.

In another implementation (denoted as a manner 2), the PCF obtains the subscription information of the user equipment from a UDM through an SMF.

S506: The SMF receives the subscription information of the user equipment from the UDM, where the subscription information includes an identifier of the user equipment (optionally, the subscription information may further include second application identification information and/or second application service provider identification information). A specific implementation is similar to S306 in the method 300, and details are not described herein again.

It should be understood that the UDM pre-stores the subscription information of the UE that subscribes to the ASP. A specific manner is not limited herein.

S507: The SMF sends the subscription information to the PCF, where the subscription information includes the identifier of the user equipment. In this case, the identifier of the user equipment may include the GPSI and/or an SUPI of the user equipment.

For example, after obtaining the subscription information of the UE through the UDM, the SMF invokes an Npcf_SMPolicyControl service to send the subscription information to the PCF.

S508: The PCF generates a PCC rule for the subscriber based on the traffic flow routing control information.

For example, after obtaining the subscription information of the user equipment, the PCF determines, based on the identifier of the user equipment, whether the user equipment belongs to the subscriber. If the user equipment belongs to the subscriber, the PCF generates the PCC rule for the user equipment based on the traffic flow routing control information. That the PCF generates the PCC rule for the user equipment based on the traffic flow routing control information may mean that the PCF generates the PCC rule for a PDU session of the user equipment based on the traffic flow routing control information.

The following describes, with reference to an example, a specific implementation in which the PCF determines whether the user equipment belongs to the subscriber.

After obtaining the subscription information of the user equipment, the PCF obtains the identifier of the user equipment from the subscription information of the user equipment. When the identifier of the user equipment is included in the identifier of the subscriber, the PCF determines that the user equipment belongs to the subscriber.

Optionally, the PCF may further determine whether the second application identification information and/or the second application service provider identification information match/matches the first application identification information and/or the first application service provider identification information, and if the second application identification information and/or the second application service provider identification information match/matches the first application identification information and/or the first application service provider identification, the PCF determines that the user equipment is user equipment corresponding to the first service type information.

That the second application identification information and/or the second application service provider identification information match/matches the first application identification information and/or the first application service provider identification information may mean that the second application identification information and/or the second application service provider identification information are/is the same as the first application identification information and/or the first application service provider identification information.

It should be understood that S509 and S510 are similar to S309 and S310 in the method 300, and details are not described herein again.

In the foregoing solution, when providing the traffic flow routing control information for the PCF through the UDR, the AF also provides the identification information of the user equipment group corresponding to the traffic flow routing control information, and the UDR may send, based on the identification information of the user equipment group, a subscriber identifier list in the group and the traffic flow routing control information together to the PCF. Therefore, when the PCF determines that an identifier of a user equipment is included in the subscriber identifier list, the PCF may generate the PCC rule for the user equipment by using the traffic flow routing control information.

Based on the foregoing solution, the policy control network element may generate the policy and charging control rule for the subscriber based on the traffic flow routing control information. Therefore, in the foregoing solution, the policy may be configured for one or more subscribers. For example, the policy may be configured for subscribers belonging to different PLMNs. Therefore, policy configuration efficiency can be improved and resources can be saved.

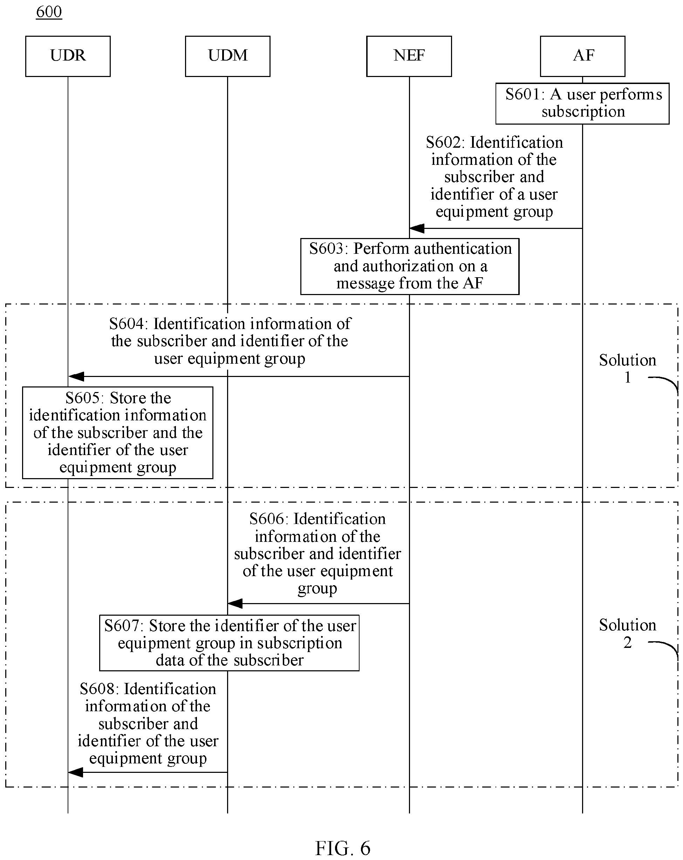

FIG. 6 is an example flowchart of a method 600 according to an embodiment of this application. It can be learned from FIG. 6 that the method 600 includes the following steps.

S601: A user performs subscription.

For example, an application service provider performs application layer service subscription with one or more users.

S602: An AF sends identification information of the subscriber and an identifier of a user equipment group to an NEF. Correspondingly, the NEF receives the identification information of the subscriber and the identifier of the user equipment group from the AF.

The identification information of the subscriber includes one or more identifiers (Subscriber ID(s)) of one or more subscribers, and the user equipment group includes the one or more subscribers. The identification information of the subscriber corresponds to the identifier of the user equipment group.

For example, after one or more users subscribe to an application, the AF may invoke Nnef_ParameterProvision to send identification information of the one or more subscribers and an identifier of a user equipment group corresponding to the subscription to the NEF.

Optionally, the AF may further send application identification information (for example, an APP ID) and/or application service provider identification information (for example, an ASP ID) to the NEF.

Optionally, the AF may further send validity period information to the NEF, where a validity period may be a subscription validity period.

S603: The NEF performs authentication and authorization on a message from the AF.

For example, the NEF performs authentication and authorization on the message from the AF to ensure that the AF has permission to perform related operations.

After the NEF authenticates and authorizes the message from the AF, the NEF sends received application subscription information to a UDR or a UDM. The following separately provides descriptions by using examples.

In an implementation (denoted as a solution 1), the AF sends the application subscription information to the UDR.

S604: The NEF sends the identification information of the subscriber and the identifier of the user equipment group corresponding to the identification information of the subscriber to the UDR. Correspondingly, the UDR receives the identification information of the subscriber and the identifier of the user equipment group from the NEF.

Optionally, the NEF may further send the application identification information and/or the application provider identification information to the UDR.

Optionally, the NEF may further send the validity period information to the UDR.

S605: The UDR stores the identification information of the subscriber and the identifier of the user equipment group.

For example, after receiving the identification information of the subscriber and the identifier of the user equipment group from the NEF, the UDR locally stores the identification information of the subscriber and the identifier of the user equipment group.

Optionally, if the UDR receives the application identification information and/or the application provider identification information, or the validity period information from the NEF, the UDR also locally stores the information.

In another implementation (denoted as a solution 2), the AF sends the application subscription information to the UDM.

S606: The NEF sends the identification information of the subscriber and the identifier of the user equipment group corresponding to the identification information of the subscriber to the UDM. Correspondingly, the UDM receives the identification information of the subscriber and the identifier of the user equipment group from the NEF.

Optionally, the NEF may further send the application identification information and/or the application provider identification information to the UDM.

Optionally, the NEF may further send the validity period information to the UDM.

S607: The UDM stores the ASP ID/APP ID, the identifier of the user equipment group, and the validity period in subscription data of the subscriber.

For example, after receiving the identification information of the subscriber and the identifier of the user equipment group from the NEF, the UDM stores the identifier of the user equipment group in the subscription data (Subscription data) of the subscriber (Subscriber(s)) corresponding to the identification information of the subscriber (Subscriber ID(s)).

Optionally, if the UDM receives the application identification information and/or the application provider identification information, or the validity period information from the NEF, the UDM also stores the information in the subscription data of the subscriber corresponding to the identification information of the subscriber.

Optionally, in S608, the UDM sends the identification information of the subscriber and the identifier of the user equipment group to the UDR.

Optionally, the UDM may send, to the UDR, the information received from the NEF, to store a parameter of the information in a database of the UDR.

It should be understood that the method 600 may be independently implemented, or may be implemented in combination with the method 500. For example, the method 600 may be used as a preparation solution of the method 500, and is performed before the method 500. This is not limited in this application.

In the foregoing solution, after the user performs subscription, the identifier of the user equipment group and the identification information of the subscriber may be sent to the UDM/UDR through the AF, so that a PCF may generate a PCC rule for the subscriber based on traffic flow routing control information, to configure the policy for a plurality of users.

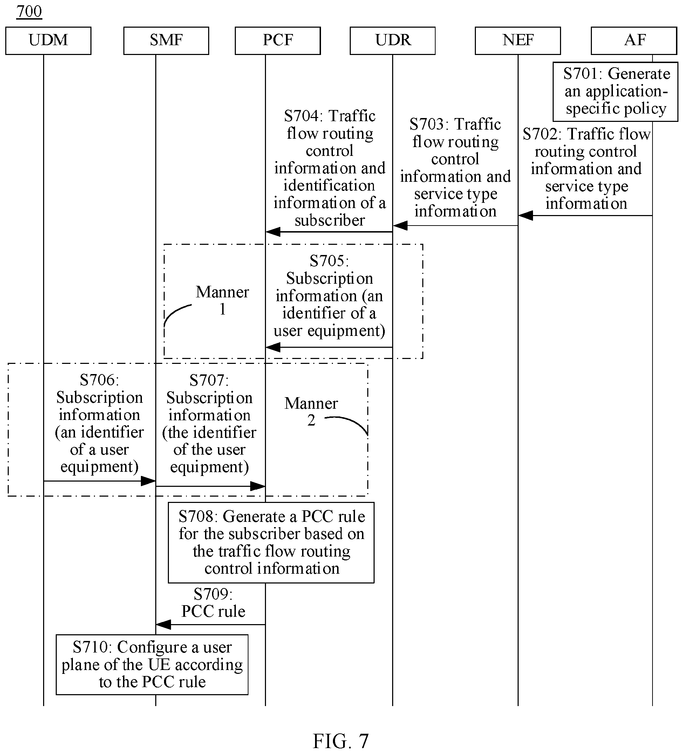

FIG. 7 is an example flowchart of a policy configuration method 700 according to an embodiment of this application. It can be learned from FIG. 7 that the method 700 includes the following steps.

S701: An AF generates an application-specific policy.

S702: The AF sends traffic flow routing control information and service type information to an NEF.

S703: The NEF sends the traffic flow routing control information and the service type information to a UDR.

It should be understood that S701 to S703 are similar to S301 to S303 in the method 400. For brevity, details are not described herein again.

S704: The UDR sends the traffic flow routing control information and identification information of a subscriber to a PCF.

For example, the UDR determines, based on the service type information, the identification information of the subscriber corresponding to the service type information, and sends the identification information of the subscriber and the traffic flow routing control information together to the PCF. For example, the UDR sends the traffic flow routing control information and the identification information of the subscriber to the PCF by using a Nudr_DM_Notify message.

It should be understood that, before the foregoing solution, the UDR pre-stores an association relationship between the service type information and the identification information of the subscriber. After the ASP subscribes to the user, the UDR may receive and store the service type information and the identification information of the subscriber from the NEF. This is not specifically limited in this embodiment.

Correspondingly, after the PCF receives the traffic flow routing control information and the identification information of the subscriber (optionally further including first application identification information and/or first application service provider identification information) from the UDR, the PCF may store the information.

It should be understood that S701 to S704 may be separately performed, or may be performed in combination with subsequent steps (S705 to S710). This is not limited in this application. When S701 to 704 are performed in combination with the subsequent steps, the subsequent steps may be performed immediately after S704 is performed, or may be performed after a period of time after S704 is performed. This is not limited in this application.

Further, the PCF obtains subscription information of a user equipment.

In an implementation (denoted as a manner 1), the PCF obtains the subscription information of the user equipment from the UDR.

S705: The UDR sends the subscription information of the user equipment to the PCF, where the subscription information includes an identifier of the user equipment, and the identifier of the user equipment may be, for example, a GPSI of the user equipment. Correspondingly, the UDR receives the subscription information of the user equipment from the PCF.

Optionally, the subscription information further includes second application identification information and/or second application service provider identification information.

It should be understood that the UDR pre-stores the subscription information of the user equipment that subscribes to the ASP. A specific manner is not limited herein.

In another implementation (denoted as a manner 2), the PCF obtains the subscription information of the user equipment from a UDM through an SMF.

S706: The SMF receives the subscription information of the user equipment from the UDM, where the subscription information includes an identifier of the user equipment. (Optionally, the subscription information further includes second application identification information and/or second application service provider identification information.) A specific implementation is similar to S306 in the method 400, and details are not described herein again.

S707: The SMF sends the subscription information to the PCF, where the subscription information includes the identifier of the user equipment. In this case, the identifier of the user equipment may include the GPSI and/or an SUPI of the user equipment.

For example, after obtaining the subscription information of the UE through the UDM, the SMF invokes an Npcf_SMPolicyControl service to send the subscription information to the PCF.

S708: The PCF generates a PCC rule for the subscriber based on the traffic flow routing control information.

It should be understood that S708 is similar to S508 in the method 500. For brevity, details are not described herein again.

It should be further understood that S709 and S710 are similar to S309 and S310 in the method 300, and details are not described herein again.

In the foregoing solution, when providing the traffic flow routing control information to the PCF through the UDR, the AF also provides the service type information corresponding to the traffic flow routing control information, and the UDR may send, based on the service type information, an identifier of the subscriber corresponding to the service type information and the traffic flow routing control information together to the PCF. Therefore, when the PCF determines that an identifier of a user equipment is included in the identifier of the subscriber, the PCF may generate the PCC rule for the user equipment by using the traffic flow routing control information.

Based on the foregoing solution, the policy control network element may generate the policy and charging control rule for the subscriber based on the traffic flow routing control information. Therefore, in the foregoing solution, the policy may be configured for one or more subscribers. For example, the policy may be configured for subscribers belonging to different PLMNs. Therefore, policy configuration efficiency can be improved and resources can be saved.

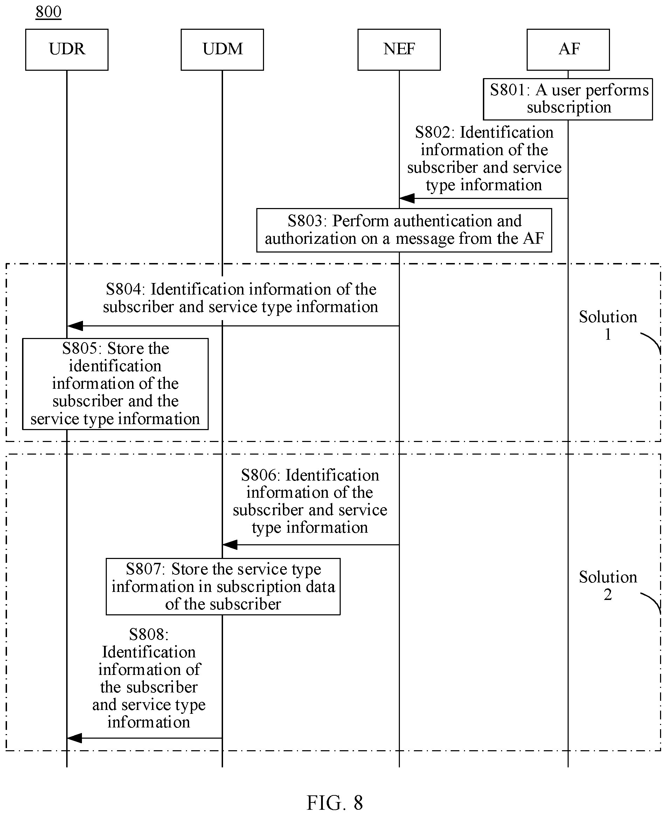

FIG. 8 is an example flowchart of a method 800 according to an embodiment of this application. It can be learned from FIG. 8 that the method 800 includes the following steps.

S801: A user performs subscription.

For example, an application service provider performs application layer service subscription with one or more users.

S802: An AF sends identification information of the subscriber and service type information to an NEF. Correspondingly, the NEF receives the identification information of the subscriber and the service type information from the AF.

The identification information of the subscriber includes one or more identifiers (Subscriber ID(s)) of one or more subscribers. The identification information of the subscriber corresponds to the service type information.

For example, after one or more users subscribe to an application, the AF may invoke Nnef_ParameterProvision to send identification information of the one or more subscribers and service type information corresponding to the subscription to the NEF.

Optionally, the AF may further send application identification information (for example, an APP ID) and/or application service provider identification information (for example, an ASP ID) to the NEF.

Optionally, the AF may further send validity period information to the NEF, where a validity period may be a subscription validity period.

S803: The NEF performs authentication and authorization on a message from the AF.

For example, the NEF performs authentication and authorization on the message from the AF to ensure that the AF has permission to perform related operations.

After the NEF authenticates and authorizes the message from the AF, the NEF sends received application subscription information to a UDR or a UDM. The following separately provides descriptions by using examples.

In an implementation (denoted as a solution 1), the AF sends the application subscription information to the UDR.

S804: The NEF sends the identification information of the subscriber and the service type information corresponding to the identification information of the subscriber to the UDR. Correspondingly, the UDR receives the identification information of the subscriber and the service type information from the NEF.

Optionally, the NEF may further send the application identification information and/or the application provider identification information to the UDR.

Optionally, the NEF may further send the validity period information to the UDR.

S805: The UDR stores the identification information of the subscriber and the service type information.

For example, after receiving the identification information of the subscriber and the service type information from the NEF, the UDR locally stores the identification information of the subscriber and the service type information.

Optionally, if the UDR receives the application identification information and/or the application provider identification information, or the validity period information from the NEF, the UDR also locally stores the information.

In another implementation (denoted as a solution 2), the AF sends the application subscription information to the UDM.

S806: The NEF sends the identification information of the subscriber and the service type information corresponding to the identification information of the subscriber to the UDM. Correspondingly, the UDM receives the identification information of the subscriber and the service type information from the NEF.

Optionally, the NEF may further send the application identification information and/or the application provider identification information to the UDM.

Optionally, the NEF may further send the validity period information to the UDM.

S807: The UDM stores the ASP ID/APP ID, the service type information, and the validity period in subscription data of the subscriber.

For example, after receiving the identification information of the subscriber and the service type information from the NEF, the UDM stores the service type information in the subscription data (Subscription data) of the subscriber (Subscriber(s)) corresponding to the identification information of the subscriber (Subscriber ID(s)).

Optionally, if the UDM receives the application identification information and/or the application provider identification information, or the validity period information from the NEF, the UDM also stores the information in the subscription data of the subscriber corresponding to the identification information of the subscriber.

Optionally, in S808, the UDM sends the identification information of the subscriber and the service type information to the UDR.

Optionally, the UDM may send, to the UDR, the information received from the NEF, to store a parameter of the information in a database of the UDR.

It should be understood that the method 800 may be independently implemented, or may be implemented in combination with the method 700. For example, the method 800 may be used as a preparation solution of the method 700, and is performed before the method 700. This is not limited in this application.

In the foregoing solution, after the user performs subscription, the service type information and the identification information of the subscriber may be sent to the UDM/UDR through the AF, so that a PCF may generate a PCC rule for the subscriber based on traffic flow routing control information, to configure the policy for a plurality of users.

In the foregoing solution, after a user subscribes to an ASP, service type information and an identifier of the subscriber may be sent to the UDR through the AF. In this case, when the AF provides traffic flow routing control information and the service type information corresponding to the traffic flow routing control information for the UDR, the UDR may determine the identifier of the corresponding subscriber based on the service type information, and send the identifier of the subscriber and the traffic flow routing control information to the PCF. Therefore, when the PCF determines that a user equipment belongs to the subscriber, the PCF may generate a PCC rule for the user equipment based on the traffic flow routing control information provided by the AF, to configure a policy for a plurality of users.

It should be understood that names of various information or messages in this application are merely possible examples, and may have other names in different scenarios. For example, the first service type information may also be referred to as first information, the first service category information may also be referred to as second information, the first subscriber category information may also be referred to as third information, and the traffic flow routing control information may also be referred to as traffic flow routing information, traffic flow routing influence information, traffic routing control information, traffic routing influence information, application function request information, or the like. This is not limited in this application.

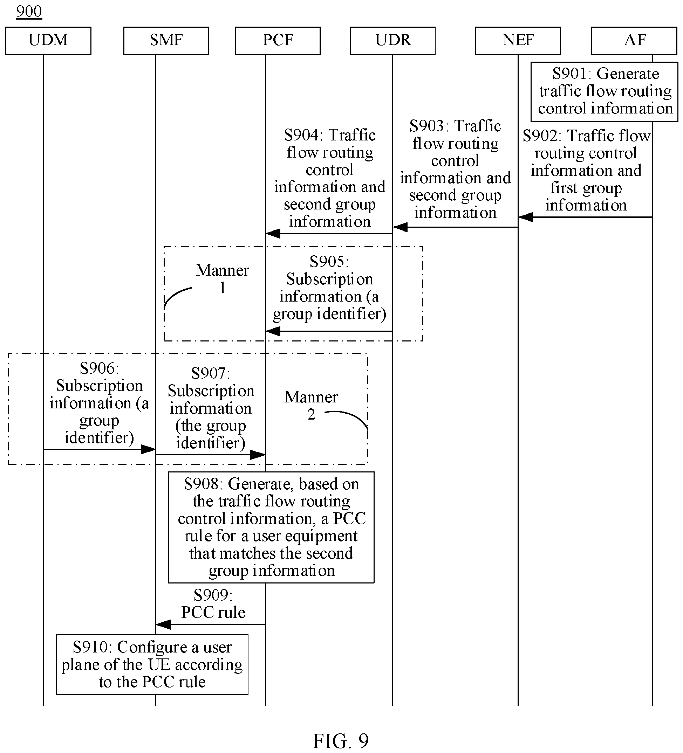

FIG. 9 is an example flowchart of a policy configuration method 900 according to an embodiment of this application. First, a possible implementation (denoted as a solution a) provided in an embodiment of this application is described with reference to the method 900. It can be learned from FIG. 9 that the method 900 includes the following steps.

S901: An AF generates traffic flow routing control information.

For example, the AF may generate the traffic flow routing control information, where the traffic flow routing control information may also be referred to as an access control policy or a traffic offload policy (traffic offload policy). Specifically, the traffic flow routing control information may be, for example, information used to control/influence traffic flow routing. For example, the traffic flow routing control information is used to route a traffic flow to local access of a data network.

S902: The AF sends the traffic flow routing control information and first group information to an NEF.

For example, the AF may invoke an Nnef_TrafficInfluence service to send the traffic flow routing control information and the first group information to the NEF, where the first group information corresponds to the traffic flow routing control information.

The first group information includes a plurality of group identifiers (group IDs). For example, the first group information includes a first group identifier (denoted as a group ID1) and a second group identifier (denoted as a group ID2), and the first group information may be denoted as a group comb 1. In other words, the first group information in this embodiment may be a set of a plurality of group identifiers. However, it should be noted that the first group information may further include other information in addition to the group identifiers. This is not limited in this application.

It should be understood that the group identifier in this application may also be referred to as group identification information.

It should be understood that the group identifier (group ID) herein may be an internal identifier or may be an external identifier. For example, the first group identifier is an internal group identifier (internal group ID), the second group identifier is an external group identifier (external group ID), or both the first group identifier and the second group identifier are internal group identifiers. This is not specifically limited in this application.

That the first group information corresponds to the traffic flow routing control information means that the traffic flow routing control information is applicable to a user equipment that matches the first group information, that the traffic flow routing control information is applicable to a user equipment that simultaneously subscribes to groups corresponding to the plurality of group identifiers in the first group information, or that the traffic flow routing control information is used to generate a policy and charging control rule for a user equipment that simultaneously subscribes to groups corresponding to the plurality of group identifiers in the first group information.

It should be further understood that the AF may simultaneously provide a plurality of pieces of first group information. In this case, the traffic flow routing control information is used for a user equipment whose subscription information matches at least one of the plurality of pieces of first group information.

It should be further understood that the first group information and the traffic flow routing control information may be two separate information elements; or the first group information may alternatively be used as a part of the traffic flow routing control information. In this case, S902 may be expressed as follows: The AF sends the traffic flow routing control information to the NEF, where the traffic flow routing control information includes the first group information.

S903: The NEF sends the traffic flow routing control information and second group information to a UDR.

For example, after receiving the traffic flow routing control information and the first group information from the AF, the NEF may invoke an Nudr_DM_Create service to send the traffic flow routing control information and the second group information to the UDR, where the second group information may be the same as the first group information, or may be obtained by converting the first group information. For example, the plurality of group identifiers included in the first group information are all internal group identifiers. In this case, the second group information is the same as the first group information, in other words, the NEF may directly send the received first group information to the UDR. For another example, the plurality of group identifiers included in the first group information are all external group identifiers. In this case, after receiving the first group information, the NEF converts the external group identifiers in the first group information into internal group identifiers to obtain the second group information, and then the NEF sends the second group information to the UDR.

It should be noted that the AF may alternatively directly send the traffic flow routing control information and the first group information to the UDR. This is not limited in this application.

S904: The UDR sends the traffic flow routing control information and the second group information to a PCF.

For example, after receiving the traffic flow routing control information and the second group information from the NEF, the UDR sends the traffic flow routing control information and the second group information to the PCF. For example, the UDR sends the traffic flow routing control information and the second group information to the PCF by using a Nudr_DM_Notify message.

It should be understood that the traffic flow routing control information and the second group information may be carried in a same message, or may be carried in different messages. In other words, the UDR may simultaneously send the traffic flow routing control information and the second group information, or may separately send the traffic flow routing control information and the second group information. The second group information may be used as a part of the traffic flow routing control information, or the second group information and the traffic flow routing control information may be two separate information elements. This is not limited in this application.

Correspondingly, after the PCF receives the traffic flow routing control information and the second group information from the UDR, the PCF may store the information.

It should be understood that the second group information and the traffic flow routing control information may be two separate information elements; or the second group information may be used as a part of the traffic flow routing control information. In this case, S903 may be expressed as that the NEF sends the traffic flow routing control information to the UDR, where the traffic flow routing control information includes the second group information; and S904 may be expressed as that the UDR sends the traffic flow routing control information to the PCF, where the traffic flow routing control information includes the second group information.

It should be further understood that S901 to S904 may be separately performed, or may be performed in combination with subsequent steps (S905 to S910). This is not limited in this application. When S901 to S904 are performed in combination with the subsequent steps, the subsequent steps may be performed immediately after S904 is performed, or may be performed after a period of time after S904 is performed. This is not limited in this application.

Further, the PCF obtains subscription information of a user equipment.

In an implementation (denoted as a manner 1), the PCF obtains the subscription information of the user equipment from the UDR.

S905: The UDR sends the subscription information of the user equipment to the PCF.

For example, the subscription information includes a group identifier (group ID) of a group to which the user equipment subscribes, or the subscription information includes a group identifier of a group to which the user equipment belongs.

It should be understood that the group identifier in the subscription information may include identification information of one or more groups.

It should be understood that the UDR pre-stores the subscription information of the user equipment. A specific manner is not limited herein.

In another implementation (denoted as a manner 2), the PCF obtains the subscription information of the user equipment from a UDM through an SMF.

S906: The SMF receives the subscription information of the user equipment from the UDM, where the subscription information includes a group identifier of a group to which the user equipment subscribes. A specific implementation is similar to S306 in the method 300, and details are not described herein again.

It should be understood that the UDM pre-stores the subscription information of the UE. A specific manner is not limited herein.

S907: The SMF sends the subscription information to the PCF, where the subscription information includes the group identifier of the group to which the user equipment subscribes.

For example, after obtaining the subscription information of the UE through the UDM, the SMF invokes an Npcf_SMPolicyControl service to send the subscription information to the PCF.

S908: The PCF generates, based on the traffic flow routing control information, a PCC rule for the user equipment that matches the second group information.

For example, after obtaining the subscription information of the user equipment, the PCF determines, based on the group identifier carried in the subscription information, whether the user equipment matches the second group information. If the user equipment matches the second group information, the PCF generates the PCC rule for the user equipment based on the traffic flow routing control information. That the PCF generates the PCC rule for the user equipment based on the traffic flow routing control information may mean that the PCF generates the PCC rule for a PDU session of the user equipment based on the traffic flow routing control information.

In a possible implementation, when the subscription information includes all group identifiers in the second group information, the PCF determines that the user equipment matches the second group information. In this case, the PCF generates the corresponding PCC rule for the user equipment based on the traffic flow routing control information.

S909: The PCF sends the PCC rule to the SMF.

S910: The SMF configures a user plane of the UE according to the PCC rule.

It should be understood that S909 and S910 are similar to S309 and S310 in the method 300, and details are not described herein again.

In the foregoing solution, when providing the traffic flow routing control information to the PCF through the UDR, the AF also provides the group information corresponding to the traffic flow routing control information. When the PCF determines that a user equipment matches the group information, the PCF may generate the PCC rule for the user equipment by using the traffic flow routing control information.

Based on the foregoing solution, the PCF may generate, based on the traffic flow routing control information, the policy and charging control rule for the user equipment corresponding to the group information. Therefore, in the foregoing solution, the policy may be configured for one or more subscribers. For example, the policy may be configured for subscribers belonging to different PLMNs. Therefore, policy configuration efficiency can be improved and resources can be saved.

With reference to an example flowchart of the method in FIG. 9, the following describes another possible implementation (denoted as a solution b) provided in an embodiment of this application.

It should be understood that, in the solution b, S901 to S907 are similar to S901 to S907 in the solution a, and therefore are not described again. However, it should be noted that in the solution b, the first group information includes a logical combination of a plurality of pieces of group identifier (group ID) information. For example, the first group information includes the following information: a group ID1 AND a group ID2 NOT a group ID3; or a group ID1 AND a group ID2 AND a group ID3. In other words, the first group information in this embodiment may include a plurality of group identifiers, and the plurality of group identifiers have a logical relationship. However, it should be noted that the first group information may further include other information in addition to the group identifiers. This is not limited in this application.

In this case, that the traffic flow routing control information corresponds to the first group information means that the traffic flow routing control information is applicable to a user equipment whose subscription data logically matches the first group information.

S908: The PCF generates, based on the traffic flow routing control information, a PCC rule for the user equipment that matches the second group information.

For example, after obtaining the subscription information of the user equipment, the PCF determines, based on the group identifier carried in the subscription information, whether the user equipment matches the second group information. If the user equipment matches the second group information, the PCF generates the PCC rule for the user equipment based on the traffic flow routing control information.

In a possible implementation, when the subscription information of the user equipment logically matches the second group information, the PCF determines that the user equipment matches the second group information, where that the subscription information of the user equipment logically matches the second group information means that the group identifier included in the subscription information of the user equipment satisfies a logical combination relationship of a plurality of pieces of group identification information in the second group information. For example, the second group information includes the following information: a group ID1 AND a group ID2 NOT a group ID3. In this case, when the subscription information of the user equipment includes the group ID 1 and the group 2, but does not include the group ID 3, it indicates that the subscription information of the user equipment logically matches the second group information. For another example, when the second group information includes the following information: a group ID1 AND a group ID2 AND a group ID3. In this case, when the subscription information of the user equipment includes the group ID 1, the group ID 2, and the group ID 3, it indicates that the subscription information of the user equipment logically matches the second group information.

S909 and S910 are similar to S309 and S310 in the method 300. For brevity, details are not described herein again.

Based on the foregoing solution, the policy control network element may generate, based on the traffic flow routing control information, the policy and charging control rule for the user equipment corresponding to the group information. Therefore, in the foregoing solution, the policy may be configured for one or more users corresponding to the first group information. For example, the policy may be configured for users belonging to different PLMNs. Therefore, policy configuration efficiency can be improved and resources can be saved.

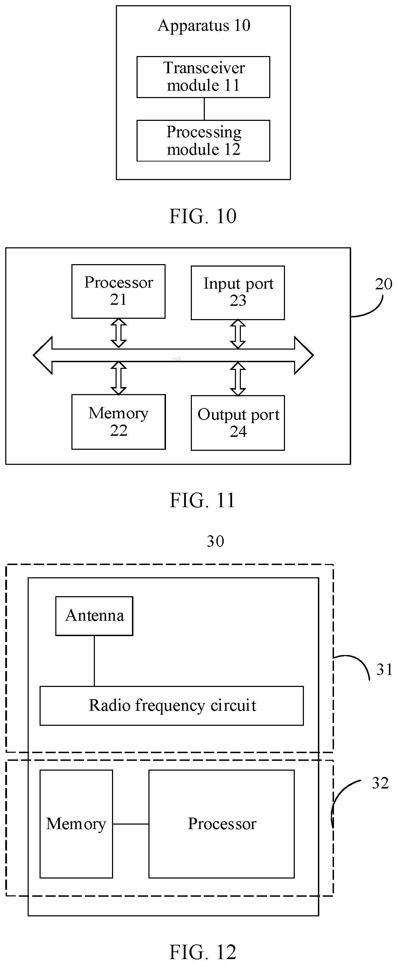

The policy configuration method provided in embodiments of this application is described above in detail with reference to FIG. 2 to FIG. 9. Policy configuration apparatuses provided in embodiments of this application are described below in detail with reference to FIG. 10 to FIG. 12. It should be understood that descriptions of the apparatus embodiments correspond to the descriptions of the method embodiments. Therefore, for content that is not described in detail, refer to the foregoing method embodiments. For brevity, details are not described herein again.

FIG. 10 is a schematic block diagram of a policy configuration apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform operations related to receiving and sending. The processing module 12 is configured to perform an operation other than receiving and sending. The transceiver module 11 may also be referred to as a communication interface or a communication unit.

In a possible design, the apparatus 10 may correspond to various network devices in the foregoing method embodiments, for example, a unified data management network element (for example, a UDM), a session management network element (for example, an SMF), a policy control network element (for example, a PCF), a unified data repository network element (for example, a UDR), and an application function network element (for example, an AF).

For example, the apparatus 10 may correspond to the unified data management network element, the session management network element, the policy control network element, the unified data repository network element, or the application function network element (the UDM, the SMF, the PCF, the UDR, or the AF) in the methods 300 to 800 in embodiments of this application.

The apparatus 10 may include modules configured to perform the methods performed by the foregoing network devices in FIG. 2 to FIG. 9. In addition, the units in the apparatus 10 and the foregoing other operations and/or functions are separately used to implement corresponding procedures of the methods in FIG. 2 to FIG. 9.

The transceiver module 11 in the apparatus 10 performs receiving and sending operations performed by the network devices in the foregoing method embodiments, and the processing module 12 performs an operation other than the receiving and sending operations.

According to the foregoing method, FIG. 11 is a schematic diagram of a policy configuration apparatus 20 according to an embodiment of this application. In a possible design, the apparatus 20 may correspond to various network devices in the foregoing method embodiments, for example, a unified data management network element (for example, a UDM), a session management network element (for example, an SMF), a policy control network element (for example, a PCF), a unified data repository network element (for example, a UDR), and an application function network element (for example, an AF).

The apparatus 20 may include a processor 21 (to be specific, an example of the processing module) and a memory 22. The memory 22 is configured to store instructions, and the processor 21 is configured to execute the instructions stored in the memory 22, so that the apparatus 20 implements the steps performed by the network devices in the methods corresponding to FIG. 2 to FIG. 9.

Further, the apparatus 20 may further include an input port 23 (to be specific, an example of the transceiver module) and an output port 24 (to be specific, another example of the transceiver module). Further, the processor 21, the memory 22, the input port 23, and the output port 24 may communicate with each other through an internal connection path, to transmit a control signal and/or a data signal. The memory 22 is configured to store a computer program, and the processor 21 may be configured to invoke and run the computer program in the memory 22, to control the input port 23 to receive a signal and control the output port 24 to send a signal, to complete the step performed by the terminal device or the network device in the foregoing method. The memory 22 may be integrated into the processor 21, or may be disposed separately from the processor 21.

Optionally, if the communication apparatus 20 is a communication device, the input port 23 is a receiver, and the output port 24 is a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 20 is a chip or a circuit, the input port 23 is an input interface, and the output port 24 is an output interface.

In an implementation, it may be considered that functions of the input port 23 and the output port 24 are implemented by using a transceiver circuit or a dedicated transceiver chip. It may be considered that the processor 21 is implemented by using a dedicated processing chip, a processing circuit, a processor, or a general-purpose chip.

In another implementation, it may be considered that the communication device provided in this embodiment of this application is implemented by using a general-purpose computer. To be specific, program code for implementing functions of the processor 21, the input port 23, and the output port 24 is stored in the memory 22, and the general-purpose processor implements the functions of the processor 21, the input port 23, and the output port 24 by executing the code in the memory 22.

For concepts, explanations, detailed descriptions, and other steps of the apparatus 20 that are related to the technical solutions provided in embodiments of this application, refer to the descriptions of the content in the foregoing methods or other embodiments. Details are not described herein again.

FIG. 12 is a simplified schematic diagram of a structure of a network device 30. The network device includes a part 31 and a part 32. The part 31 is mainly configured to send and receive a radio frequency signal and perform conversion between the radio frequency signal and a baseband signal. The part 32 is mainly configured to perform baseband processing, control the network device, and the like. The part 31 may be generally referred to as a transceiver module, a transceiver, a transceiver circuit, or the like. The part 32 is generally a control center of the network device, may be generally referred to as a processing module, and is configured to control the network device to perform a processing operation on a network device side in the foregoing method embodiments.

The transceiver module in the part 31 may also be referred to as a transceiver machine, a transceiver, or the like, and includes an antenna and a radio frequency circuit. The radio frequency circuit is mainly configured to perform radio frequency processing. For example, a component that is in the part 31 and that is configured to implement a receiving function may be considered as a receiving module, and a component that is configured to implement a sending function may be considered as a sending module. In other words, the part 31 includes a receiving module and a sending module. The receiving module may also be referred to as a receiver machine, a receiver, a receiving circuit, or the like. The sending module may be referred to as a transmitter machine, a transmitter, a transmitting circuit, or the like.

The part 32 may include one or more boards, and each board may include one or more processors and one or more memories. The processor is configured to read and execute a program in the memory to implement a baseband processing function and control the network device. If there are a plurality of boards, the boards may be interconnected to enhance a processing capability. In an optional implementation, a plurality of boards may share one or more processors, a plurality of boards share one or more memories, or a plurality of boards simultaneously share one or more processors.

For example, in an implementation, the network device shown in FIG. 12 may be any network device shown in the methods shown in FIG. 2 to FIG. 9, for example, a unified data management network element (for example, a UDM), a session management network element (for example, an SMF), a policy control network element (for example, a PCF), a unified data repository network element (for example, a UDR), or an application function network element (for example, an AF).

The transceiver module in the part 31 is configured to perform steps related to receiving and sending of any network device in the methods shown in FIG. 2 to FIG. 9. The part 32 is configured to perform processing-related steps of any network device in the methods shown in FIG. 2 to FIG. 9.

It should be understood that FIG. 12 is merely an example rather than a limitation, and the foregoing network device including the transceiver module and the processing module may not depend on the structure shown in FIG. 12.

When the apparatus 30 is a chip, the chip includes a transceiver module and a processing module. The transceiver module may be an input/output circuit or a communication interface. The processing module is a processor, a microprocessor, or an integrated circuit integrated on the chip.

An embodiment of this application further provides a computer-readable storage medium. The computer-readable storage medium stores computer instructions used for implementing the method performed by the network device in the foregoing method embodiments.

For example, when the computer program is executed by a computer, the computer can implement the method performed by the network device in the foregoing method embodiments.

An embodiment of this application further provides a computer program product including instructions. When the instructions are executed by a computer, the computer implements the method performed by the first device or the method performed by the second device in the foregoing method embodiments.

An embodiment of this application further provides a communication system. The communication system includes the network device in the foregoing embodiments.

For explanations and beneficial effects of related content in any one of the foregoing provided communication apparatuses, refer to the corresponding method embodiments provided above. Details are not described herein again.

In embodiments of this application, the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (which is also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be executed by a network device, or a function module in the network device that can invoke and execute a program.

Various aspects or features of this application may be implemented as methods, apparatuses, or products using standard programming and/or engineering technologies. The term "product" used in this specification may cover a computer program accessible from any computer-readable device, carrier, or medium. For example, a computer-readable medium may include, but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive).

The various storage media described in this specification may represent one or more devices and/or other machine-readable media for storing information. The term "machine-readable media" may include but is not limited to a wireless channel, and various other media that can store, contain, and/or carry instructions and/or data.

It should be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described herein is intended to include, but is not limited to, these and any other suitable type of memory.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the apparatuses and units described above, reference may be made to a corresponding process in the foregoing method embodiments, and details are not described herein.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, (SSD))), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and the specification.

## Claims

1. A policy configuration method, comprising:
receiving, by a policy control network element, traffic flow routing control information and first service type information corresponding to the traffic flow routing control information, wherein the first service type information comprises first service category information and/or first subscriber category information;
generating, by the policy control network element based on the traffic flow routing control information, a policy and charging control rule for a user equipment corresponding to the first service type information; and
sending, by the policy control network element, the policy and charging control rule.

2. The method according to claim 1, wherein the generating, by the policy control network element based on the traffic flow routing control information, a policy and charging control rule for a user equipment corresponding to the first service type information comprises:
determining, by the policy control network element based on subscription information of the user equipment, that the user equipment is the user equipment corresponding to the first service type information; and
generating, by the policy control network element, the policy and charging control rule for the user equipment based on the traffic flow routing control information.

3. The method according to claim 2, wherein the determining, by the policy control network element based on subscription information of the user equipment, that the user equipment is the user equipment corresponding to the first service type information comprises:
determining, by the policy control network element when the first service type information matches second service type information, that the user equipment is the user equipment corresponding to the first service type information, wherein the second service type information is comprised in the subscription information of the user equipment, and the second service type information comprises second service category information and/or second subscriber category information.

4. The method according to claim 3, wherein the determining, by the policy control network element when the first service type information matches second service type information, that the user equipment is the user equipment corresponding to the first service type information comprises:
if the second service type information comprises the first service type information, determining, by the policy control network element, that the user equipment is the user equipment corresponding to the first service type information; or
if the first service type information comprises a plurality of pieces of service type information, when the second service type information comprises all of the plurality of pieces of service type information, determining, by the policy control network element, that the user equipment is the user equipment corresponding to the first service type information; or when the second service type information comprises at least one of the plurality of pieces of service type information, determining, by the policy control network element, that the user equipment is the user equipment corresponding to the first service type information, wherein each of the plurality of pieces of service type information comprises the first service category information and/or the first subscriber category information.

5. The method according to any one of claims 1 to 4, wherein the method further comprises:
receiving, by the policy control network element, first application identification information and/or first application service provider identification information that correspond/corresponds to the first service type information.

6. The method according to claim 5, wherein the determining, by the policy control network element, that the user equipment is the user equipment corresponding to the first service type information comprises:
when the first application identification information and/or the first application service provider identification information match/matches second application identification information and/or second application service provider identification information, determining, by the policy control network element, that the user equipment is the user equipment corresponding to the first service type information, wherein the second application identification information and/or the second application service provider identification information are/is comprised in the subscription information of the user equipment.

7. The method according to claim 5 or 6, wherein the method further comprises:
when the first application identification information and/or the first application service provider identification information are/is the same as the second application identification information and/or the second application service provider identification information, determining, by the policy control network element, that the first application identification information and/or the first application service provider identification information match/matches the second application identification information or the second application service provider identification information.

8. The method according to any one of claims 1 to 7, wherein the receiving, by a policy control network element, traffic flow routing control information and first service type information corresponding to the traffic flow routing control information comprises:
receiving, by the policy control network element, the traffic flow routing control information and the first service type information corresponding to the traffic flow routing control information from a network exposure function network element.

9. The method according to any one of claims 1 to 8, wherein the method further comprises:
receiving, by the policy control network element, the subscription information of the user equipment from a unified data repository network element or a session management network element.

10. A policy configuration method, comprising:
receiving, by a policy control network element, traffic flow routing control information and identification information of a subscriber corresponding to the traffic flow routing control information;
generating, by the policy control network element, a policy and charging control rule for the subscriber based on the traffic flow routing control information; and
sending, by the policy control network element, the policy and charging control rule.

11. The method according to claim 10, wherein the generating, by the policy control network element, a policy and charging control rule for the subscriber based on the traffic flow routing control information comprises:
generating, by the policy control network element based on the traffic flow routing control information, the policy and charging control rule for a user equipment that belongs to the subscriber.

12. The method according to claim 11, wherein the method further comprises:
when an identifier of the user equipment is comprised in the identification information of the subscriber, determining, by the policy control network element, that the user equipment belongs to the subscriber.

13. The method according to claim 11 or 12, wherein the method further comprises:
receiving, by the policy control network element, subscription information of the user equipment from a unified data repository network element or a session management network element, wherein the subscription information of the user equipment comprises the identifier of the user equipment.

14. The method according to any one of claims 10 to 13, wherein the receiving, by a policy control network element, traffic flow routing control information and identification information of a subscriber corresponding to the traffic flow routing control information comprises:
receiving, by the policy control network element, the traffic flow routing control information and the identification information of the subscriber corresponding to the traffic flow routing control information from a network exposure function network element.

15. A policy configuration method, comprising:
sending, by an application function network element, traffic flow routing control information and first service type information corresponding to the traffic flow routing control information, wherein the first service type information comprises first service category information and/or first subscriber category information.

16. The method according to claim 15, wherein the method further comprises:
sending, by the application function network element, identification information of one or more subscribers and the first service type information, wherein the identification information of the one or more subscribers is associated with the first service type information.

17. The method according to claim 15 or 16, wherein the first service type information comprises a plurality of pieces of service type information, and each of the plurality of pieces of service type information comprises the first service category information and/or the first subscriber category information.

18. The method according to any one of claims 15 to 17, wherein the method further comprises:
sending, by the application function network element, first application identification information and/or first application service provider identification information that correspond/corresponds to the first service type information.

19. A policy configuration method, comprising:
receiving, by a unified data repository network element, traffic flow routing control information and identification information of a user equipment group corresponding to the traffic flow routing control information;
determining, by the unified data repository network element based on the identification information of the user equipment group, identification information of a subscriber corresponding to the identification information of the user equipment group; and
sending, by the unified data repository network element, the traffic flow routing control information and the identification information of the subscriber to a policy control network element, wherein the traffic flow routing control information is associated with the identification information of the subscriber.

20. The method according to claim 19, wherein before the unified data repository network element receives the traffic flow routing control information and the identification information of the user equipment group corresponding to the traffic flow routing control information from an application function network element, the method further comprises:
receiving, by the unified data repository network element, the identification information of the user equipment group and the identification information of the subscriber from the application function network element, wherein an identifier of the user equipment group is associated with the identification information of the subscriber.

21. A policy configuration method, comprising:
receiving, by a policy control network element, traffic flow routing control information and group information corresponding to the traffic flow routing control information, wherein the group information comprises a plurality of group identifiers;
generating, by the policy control network element based on the traffic flow routing control information, a policy and charging control rule for a user equipment that matches the group information; and
sending, by the policy control network element, the policy and charging control rule.

22. The method according to claim 21, wherein the generating, by the policy control network element based on the traffic flow routing control information, a policy and charging control rule for a user equipment that matches the group information comprises:
determining, by the policy control network element based on subscription information of the user equipment, that the user equipment matches the group information; and
generating, by the policy control network element, the policy and charging control rule for the user equipment based on the traffic flow routing control information.

23. The method according to claim 22, wherein the determining, by the policy control network element based on subscription information of the user equipment, that the user equipment matches the group information comprises:
when the subscription information of the user equipment comprises the plurality of group identifiers in the group information, determining, by the policy control network element, that the user equipment matches the group information.

24. The method according to claim 22, wherein the plurality of group identifiers in the group information have a logical relationship; and
the determining, by the policy control network element based on subscription information of the user equipment, that the user equipment matches the group information comprises:
when the subscription information of the user equipment satisfies the logical relationship between the plurality of group identifiers, determining, by the policy control network element, that the user equipment matches the group information.

25. The method according to any one of claims 22 to 24, wherein the method further comprises:
receiving, by the policy control network element, the subscription information of the user equipment from a unified data repository network element or a session management network element.

26. A policy configuration apparatus, wherein the apparatus comprises a module configured to perform the method according to any one of claims 1 to 9, a module configured to perform the method according to any one of claims 10 to 14, a module configured to perform the method according to any one of claims 15 to 18, a module configured to perform the method according to claim 19 or 20, or a module configured to perform the method according to any one of claims 21 to 25.

27. A policy configuration apparatus, comprising:
a processor, configured to execute a computer program stored in a memory, to enable the apparatus to perform the method according to any one of claims 1 to 9, to enable the apparatus to perform the method according to any one of claims 10 to 14, to enable the apparatus to perform the method according to any one of claims 15 to 18, to enable the apparatus to perform the method according to claim 19 or 20, or to enable the apparatus to perform the method according to any one of claims 21 to 25.

28. A computer program product, wherein the computer program product comprises instructions for performing the method according to any one of claims 1 to 9, the computer program product comprises instructions for performing the method according to any one of claims 10 to 14, the computer program product comprises instructions for performing the method according to any one of claims 15 to 18, the computer program product comprises instructions for performing the method according to claim 19 or 20, or the computer program product comprises instructions for performing the method according to any one of claims 21 to 25.

29. A computer-readable storage medium, wherein the computer-readable storage medium stores a computer program; when the computer program runs on a computer, the computer is enabled to execute instructions for performing the method according to any one of claims 1 to 9, the computer is enabled to execute instructions for performing the method according to any one of claims 10 to 14, the computer is enabled to execute instructions for performing the method according to any one of claims 15 to 18, the computer is enabled to execute instructions for performing the method according to claim 19 or 20, or the computer is enabled to execute instructions for performing the method according to any one of claims 21 to 25.

30. A policy configuration method, comprising:
sending, by an application function network element, traffic flow routing control information and first service type information corresponding to the traffic flow routing control information to a policy control network element, wherein the first service type information comprises first service category information and/or first subscriber category information;
receiving, by the policy control network element, the traffic flow routing control information and the first service type information from the application function network element;
generating, by the policy control network element based on the traffic flow routing control information, a policy and charging control rule for a user equipment corresponding to the first service type information; and
sending, by the policy control network element, the policy and charging control rule.

31. A policy configuration method, comprising:
receiving, by a unified data repository network element, traffic flow routing control information and identification information of a user equipment group corresponding to the traffic flow routing control information;
determining, by the unified data repository network element based on the identification information of the user equipment group, identification information of a subscriber corresponding to the identification information of the user equipment group;
sending, by the unified data repository network element, the traffic flow routing control information and the identification information of the subscriber to a policy control network element;
receiving, by the policy control network element, the traffic flow routing control information and the identification information of the subscriber from the unified data repository network element;
generating, by the policy control network element, a policy and charging control rule for the subscriber based on the traffic flow routing control information; and
sending, by the policy control network element, the policy and charging control rule.

32. A policy configuration method, comprising:
sending, by an application function network element, traffic flow routing control information and first group information corresponding to the traffic flow routing control information to a network exposure function network element;
receiving, by the network exposure function network element, the traffic flow routing control information and the first group information from the application function network element;
sending, by the network exposure function network element, the traffic flow routing control information and second group information corresponding to the traffic flow routing control information to a unified data repository network element, wherein the second group information is obtained based on the first group information;
receiving, by the unified data repository network element, the traffic flow routing control information and the second group information from the network exposure function network element;
sending, by the unified data repository network element, the traffic flow routing control information and the second group information to a policy control network element;
receiving, by the policy control network element, the traffic flow routing control information and the second group information from the unified data repository network element, wherein the second group information comprises a plurality of group identifiers;
generating, by the policy control network element based on the traffic flow routing control information, a policy and charging control rule for a user equipment that matches the second group information; and
sending, by the policy control network element, the policy and charging control rule.
